(19) Europäisches Patentamt
European Patent Office
Office européen des brevets

(11) EP 2 687 560 A1

(12) EUROPEAN PATENT APPLICATION
published in accordance with Art. 153(4) EPC

(43) Date of publication:
**22.01.2014 Bulletin 2014/04**

(21) Application number: **12758259.1**

(22) Date of filing: **14.03.2012**

(51) Int Cl.:
***C08L 29/04*** *(2006.01)* ***C08F 216/06*** *(2006.01)*
***C08F 220/56*** *(2006.01)*

(86) International application number:
**PCT/JP2012/056606**

(87) International publication number:
**WO 2012/124746 (20.09.2012 Gazette 2012/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2011 JP 2011059307**
**28.03.2011 JP 2011070135**

(71) Applicant: **Kuraray Co., Ltd.**
**Okayama 710-0801 (JP)**

(72) Inventors:
- **NII Shinsuke**
  **Tainai-shi, Niigata 959-2691 (JP)**
- **NAKAMAE Masato**
  **Kurashiki-shi, Okayama 713-8550 (JP)**
- **TAOKA Yuta**
  **Kurashiki-shi, Okayama 713-8550 (JP)**

(74) Representative: **Müller-Boré & Partner**
**Patentanwälte PartG mbB**
**Grafinger Straße 2**
**81671 München (DE)**

# (54) MODIFIED VINYL ALCOHOL POLYMER SOLUTION AND METHOD FOR PRODUCING SAME

(57) An object of the present invention is to provide a modified PVA solution that enables physical properties such as viscosity to be adjusted even when a concentration of the modified PVA having high hydrophobicity is increased, and to provide a method for producing the modified PVA solution.

The modified vinyl alcohol polymer solution of the present invention comprises: a modified vinyl alcohol polymer; an organic solvent; and water, the modified vinyl alcohol polymer: comprising a monomer unit having an alkyl group having a carbon number of 2 or greater and 29 or less;, and having a percentage content of the monomer unit being no less than 0.05 mol% and no greater than 5 mol%, and a degree of saponification of the modified vinyl alcohol polymer being no less than 20 mol% and no greater than 99.99 mol%, and in terms of Hansen solubility parameters of the organic solvent, δd being no less than 13 $MPa^{0.5}$ and no greater than 18 $MPa^{0.5}$, δp being no less than 4 $MPa^{0.5}$ and no greater than 9 $MPa^{0.5}$, and δh being no less than 9 $MPa^{0.5}$ and no greater than 13 $MPa^{0.5}$.

EP 2 687 560 A1

## Description

[TECHNICAL FIELD]

The present invention relates to a modified vinyl alcohol polymer solution, and a method for producing the same.

[BACKGROUND ART]

Vinyl alcohol polymer (hereinafter, may be also abbreviated as "PVA") has superior interface characteristics and strength characteristics as a few water soluble crystalline macromolecules. Therefore, PVA has been broadly used as components, raw materials or the like of various types of binders, paper processing agents, stabilizers, thickeners, films, fibers, and the like. In addition, enhanced functionalization of PVA to improve a particular performance by adjusting crystallinity and/or introducing a functional group thereto, etc., has been also carried out, thereby leading to developments of a variety of modified PVAs as generally referred to.

A hydrophobic group-modified PVA that is one of such modified PVAs has been known to provide a solution having a high viscosity due to interactions of hydrophobic groups exhibited in water-based solvents. Thus, hydrophobic group-modified PVA is useful as thickeners for coating materials and adhesives, and hydrophobic group-modified PVAs that include any of various types of monomer units have been developed (see, Japanese Unexamined Patent Application, Publication Nos. 2008-291120, H10-338714 and H8-60137). However, such a highly viscous hydrophobic group-modified PVA solution is disadvantageous in that handleability is inferior due to such high viscosity. Such high viscosity of this solution can be moderated by adding an appropriate additive. However, it may be difficult to recover the high viscosity, etc., as desired again once such an additive is added, and thus handleability is unsatisfactory also in this respect.

[PRIOR ART DOCUMENTS]

[PATENT DOCUMENTS]

Patent Document 1: Japanese Unexamined Patent Application, Publication No. 2008-291120
Patent Document 2: Japanese Unexamined Patent Application, Publication No. H10-338714
Patent Document 3: Japanese Unexamined Patent Application, Publication No. H8-60137

[SUMMARY OF THE INVENTION]

[PROBLEMS TO BE SOLVED BY THE INVENTION]

The present invention was made in view of the foregoing circumstances, and an object of the invention is to provide a modified PVA solution that is superior in handleability and enables physical properties such as viscosity to be adjusted even in the case in which a concentration of the modified PVA having high hydrophobicity is increased. Furthermore, another object of the invention is to provide a method for producing such a modified PVA solution.

[MEANS FOR SOLVING THE PROBLEMS]

The invention made for solving the aforementioned problems is,
a modified vinyl alcohol polymer solution comprising:

a modified vinyl alcohol polymer; an organic solvent; and water,
the modified vinyl alcohol polymer: comprising a monomer unit having an alkyl group having a carbon number of 2 or greater and 29 or less; and having a percentage content of the monomer unit being no less than 0.05 mol% and no greater than 5 mol%; and a degree of saponification of the modified vinyl alcohol polymer being no less than 20 mol% and no greater than 99.99 mol%, and
in terms of Hansen solubility parameters of the organic solvent, $\delta d$ being no less than 13 $MPa^{0.5}$ and no greater than 18 $MPa^{0.5}$, $\delta p$ being no less than 4 $MPa^{0.5}$ and no greater than 9 $MPa^{0.5}$ and $\delta h$ being no less than 9 $MPa^{0.5}$ and no greater than 13 $MPa^{0.5}$.

The modified PVA solution comprises an organic solvent having specific Hansen solubility parameters. The organic solvent has relatively superior miscibility with the modified PVA and water, and enables the concentration of the

modified PVA to be increased. In addition, it is believed that the organic solvent inhibits interactions of hydrophobic groups included in the modified PVA. Therefore, according to the modified PVA solution, even in cases in which the concentration is increased, an elevation of the viscosity can be prevented. Furthermore, the modified PVA solution enables physical properties of the modified PVA such as high viscosity to be exhibited by dilution with water, mixing with a dispersion liquid containing a surfactant, or the like. Accordingly, since the modified PVA solution enables physical properties such as viscosity to be adjusted, superior handleability is achieved.

It is preferred that the monomer unit has a side chain that is more hydrophobic than the main chain, and has a carbon number of 11 or greater. It is preferred that the monomer unit has a carbon number of 11 or greater, and a ratio of the carbon number to the oxygen number (carbon number/ oxygen number) in the side chain of the monomer unit is greater than 3/1.

Due to the monomer unit having the specified structure above, the adjustability of the viscosity of the solution can be enhanced.

It is preferred that:

the monomer unit is represented by the following general formula (I); and
the viscosity average degree of polymerization of the modified vinyl alcohol polymer is no less than 200 and no greater than 5,000.

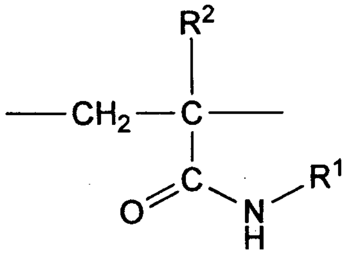

(I)

wherein, $R^1$ represents a linear or branched alkyl group having a carbon number of 8 or greater and 29 or less; and $R^2$ represents a hydrogen atom or an alkyl group having a carbon number of 1 or greater and 8 or less.

Due to the monomer unit in the modified PVA having the structure described above, and the degree of polymerization falling within the above range, the adjustability of the viscosity of the solution can be enhanced. Specifically, the modified PVA solution is particularly superior in a function of increasing the viscosity exhibited by mixing, etc., with the dispersion liquid containing a surfactant.

The modified vinyl alcohol polymer is preferably obtained by saponifying a copolymer of an unsaturated monomer represented by the following general formula (II) and a vinyl ester monomer.

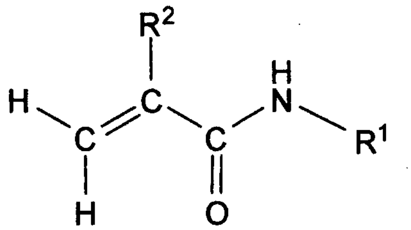

(II)

wherein, $R^1$ and $R^2$ are as defined in the above formula (I).

Since the degree of saponification, etc., of the modified PVA obtained in this manner can be easily adjusted, adjustability of the viscosity, etc., of the solution can be further enhanced.

It is also preferred that the monomer unit has a polyoxyalkylene group represented by the following general formula (III), and the viscosity average degree of polymerization of the modified vinyl alcohol polymer is no less than 200 and no greater than 5,000.

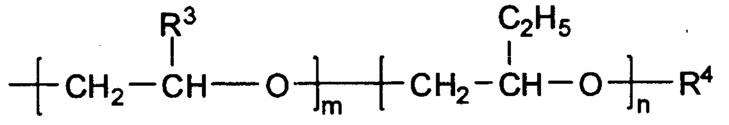

( III )

Wherein, $R^3$ represents a hydrogen atom or a methyl group; $R^4$ represents a hydrogen atom or an alkyl group having a carbon number of 1 or greater and 8 or less; $1 \leq m \leq 10$; and $3 \leq n \leq 20$.

Adjustability of the viscosity, etc., of the solution can be enhanced by the monomer unit in the modified PVA having the structure described above, and the degree of polymerization falling within the above range.

The modified vinyl alcohol polymer is preferably obtained by saponifying a copolymer of an unsaturated monomer represented by the following general formula (IV) and a vinyl ester monomer:

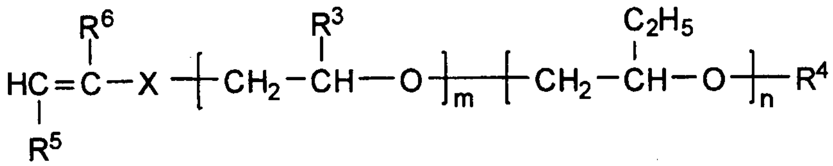

( IV )

wherein, $R^3$, $R^4$, m and n are as defined in the above general formula (III); $R^5$ represents a hydrogen atom or a -$COOM^1$ group; $M^1$ represents a hydrogen atom, an alkali metal atom or an ammonium group; $R^6$ represents a hydrogen atom, a methyl group or a -CH2-$COOM^2$ group; $M^2$ represents a hydrogen atom, an alkali metal atom or an ammonium group; X represents -O-, -$CH_2$-O-, -CO-, -$(CH_2)_k$-, -CO-O-, -CO-$NR^7$- or -CO-$NR^7$-$CH_2$-; $R^7$ represents a hydrogen atom or an alkyl group having a carbon number of 1 or greater and 4 or less; and $1 \leq k \leq 15$.

Since the degree of saponification and the like of modified PVA obtained in this manner can be also adjusted easily, adjustability of the viscosity, etc., of the solution can be further enhanced.

In terms of Hansen solubility parameters of the organic solvent, δd is preferably no less than 14 $MPa^{0.5}$ and no greater than 17 $MPa^{0.5}$, and δp is preferably no less than 4 $MPa^{0.5}$ and no greater than 8 $MPa^{0.5}$. When the organic solvent having such parameters is used, the solubility and/or adjustability of the viscosity, etc., of the modified PVA can be further improved.

It is preferred that a mass ratio of the organic solvent to water (organic solvent: water) is no less than 5:95 and no greater than 40:60. According to the modified PVA solution, the ratio of the organic solvent to water comprised falling within the above range enables both high solubility and superior adjustability of the viscosity of the modified PVA to be attained.

It is preferred that the concentration of the modified vinyl alcohol polymer is no less than 5% by mass and no greater than 70% by mass. Even when the modified PVA solution has such a high concentration, an elevation of the viscosity can be prevented, thereby capable of leading to superior handleability.

The method of the present invention for producing a modified vinyl alcohol polymer solution comprises the step of:

mixing a modified vinyl alcohol polymer, an organic solvent and water,
the modified vinyl alcohol polymer: comprising a monomer unit having an alkyl group having a carbon number of 2 or greater and 29 or less; and having a percentage content of the monomer unit being no less than 0.05 mol% and no greater than 5 mol%, and a degree of saponification of the modified vinyl alcohol polymer being no less than 20 mol% and no greater than 99.99 mol%, and
in terms of Hansen solubility parameters of the organic solvent, δd being no less than 13 $MPa^{0.5}$ and no greater than 18 $MPa^{0.5}$, δp being no less than 4 $MPa^{0.5}$ and no greater than 9 $MPa^{0.5}$, and δh being no less than 9 $MPa^{0.5}$ and no greater than 13 $MPa^{0.5}$.

According to the method for producing a modified vinyl alcohol polymer solution, a modified PVA solution can be obtained that enables physical properties such as viscosity to be adjusted even if the concentration is high.

[EFFECTS OF THE INVENTION]

The modified vinyl alcohol polymer solution of the present invention is superior in adjustability of physical properties such as viscosity while elevation of the viscosity can be prevented even in cases in which the concentration is high, the viscosity can be increased by mixing, etc., with a dispersion liquid containing a surfactant, and the like.

Therefore, the modified vinyl alcohol polymer solution is superior in handleability, and thus can be suitably used as a thickener for adhesives and coating materials, and the like. In addition, according to the method for producing a modified vinyl alcohol polymer solution, a solution having such a high concentration and being superior in adjustability of physical properties can be easily obtained.

[DESCRIPTION OF EMBODIMENTS]

Hereinafter, an embodiment of the modified vinyl alcohol polymer solution and the method for producing the same of the present invention will be described in detail.

Modified PVA Solution

The modified PVA solution of the present invention comprises a modified PVA, an organic solvent and water.

Modified PVA

The modified PVA comprises a monomer unit having an alkyl group having a carbon number of 2 or greater and 29 or less. More specifically, the modified PVA is a copolymer comprising a monomer unit having an alkyl group having a carbon number of 2 or greater and 29 or less, and a vinyl alcohol monomer unit ($-CH_2-CHOH-$), and may further comprise other monomer unit.

The alkyl group having a carbon number of 2 or greater and 29 or less as referred to means a group represented by $C_nH_{2n+1}$ ($2 \leq n \leq 29$), and examples thereof include an ethyl group, a propyl group, a butyl group, a pentyl group, a hexyl group, an octyl group, a decyl group, a dodecyl group, a hexadecyl group, an octadecyl group, an icosyl group, a hexacosyl group, an octacosyl group and the like. The alkyl group may be either linear or branched. Moreover, the monomer unit may have a plurality of the alkyl groups.

Examples of the monomer unit having an alkyl group having a carbon number of 2 or greater and 29 or less include monomer units derived from:

$\alpha$-olefins such as ethylene, propylene, n-butene and isobutylene;
vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, nonyl vinyl ether, dodecyl vinyl ether and octadecyl vinyl ether;
N-alkyl (meth)acrylamide represented by the general formula (II) described later;
unsaturated monomers having an oxybutylene unit or oxypropylene unit represented by the general formula (IV) described later; and the like.

It is preferred that the monomer unit has a carbon number of 11 or greater, and a ratio (carbon number/ oxygen number) of the carbon number (number of carbon atoms) to the oxygen number (number of oxygen atoms) in the side chain of the monomer unit is greater than 3/1. It is to be noted that the upper limit of the ratio is, for example, 100/1, and preferably 50/1. The side chain as referred to herein means a portion produced in polymerizing the monomer unit by branching from a carbon atom constituting the main chain. In addition, the carbon number of the monomer unit is a sum of the carbon number in the side chain and the carbon number in the main chain.

More specifically, the monomer unit preferably has an alkyl group having a carbon number of 8 or greater and 29 or less, and the following monomer unit (A) is more preferred. Also, the monomer unit is preferably the following monomer unit (B).

Monomer Unit (A)

The monomer unit (A) is represented by the following general formula (I).

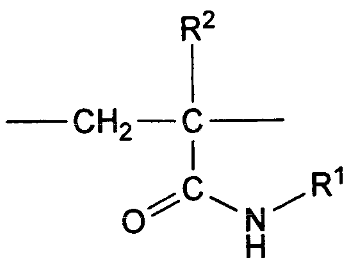

(I)

In the formula (I), $R^1$ represents a linear or branched alkyl group having a carbon number of 8 or greater and 29 or less; and $R^2$ represents a hydrogen atom or an alkyl group having a carbon number of 1 or greater and 8 or less.

The carbon number in the linear or branched alkyl group represented by $R^1$ is 8 or greater and 29 or less, preferably 10 or greater and 25 or less, and still more preferably 12 or greater and 24 or less. When the carbon number is no less than 8, interactions of alkyl groups can be sufficiently exhibited, thereby enabling a thickening property and the like to be further improved. On the other hand, when the carbon number is greater than 29, the solubility of the modified PVA is impaired.

$R^2$ represents a hydrogen atom or an alkyl group having a carbon number of 1 or greater and 8 or less, and $R^2$ preferably represents a hydrogen atom or a methyl group in light of ease in synthesis, and the like.

The unsaturated monomer that gives the monomer unit (A) is exemplified by a compound represented by the following general formula (II).

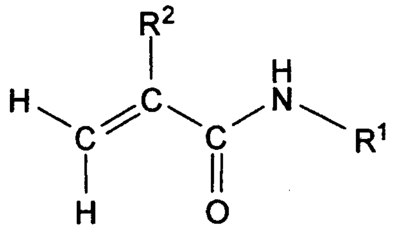
(II)

In the formula (II), $R^1$ and $R^2$ are as defined in the above formula (I).

Specific examples of the unsaturated monomer represented by the above general formula (II) include N-octylacrylamide, N-decylacrylamide, N-dodecylacrylamide, N-octadecylacrylamide, N-hexacosylacrylamide, N-octylmethacrylamide, N-decylmethacrylamide, N-dodecylmethacrylamide, N-octadecylmethacrylamide, N-hexacosylmethacrylamide, and the like. Among these, N-octadecylacrylamide, N-octylmethacrylamide, N-decylmethacrylamide, N-dodecylmethacrylamide, N-octadecylmethacrylamide and N-hexacosylmethacrylamide are preferred, and N-octadecylacrylamide, N-dodecylmethacrylamide and N-octadecylmethacrylamide are more preferred.

Monomer Unit (B)

The monomer unit (B) has a polyoxyalkylene group represented by the following general formula (III). When the monomer unit (B) is comprised, a modified PVA that comprises the polyoxyalkylene group in its side chain can be provided.

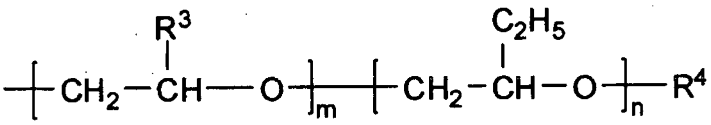
(III)

In the formula (III), $R^3$ represents a hydrogen atom or a methyl group; $R^4$ represents a hydrogen atom or an alkyl group having a carbon number of 1 or greater and 8 or less; $1 \leq m \leq 10$; and $3 \leq n \leq 20$. Wherein, the unit having the number of repeating units of m is designated as "unit 1", whereas the unit having the number of repeating units of n is designated as "unit 2". The arrangement of the unit 1 and the unit 2 may provide either a random or block configuration. It is to be noted that at least the ethyl group included in unit 2 in the monomer unit (B) corresponds to the alkyl group having a carbon number of 2 or greater and 29 or less.

The number m of repeating units of the unit 1 in POA (polyoxyalkylene) group represented by the general formula (III) is $1 \leq m \leq 10$, preferably $1 \leq m \leq 5$, and particularly preferably $1 \leq m \leq 2$. When m is no less than 1, the POA group can be prevented from being excessively hydrophobic, and thus water solubility of the modified PVA can be improved. Also, the number n of repeating units of the unit 2 is $3 \leq n \leq 20$, preferably $5 \leq n \leq 18$, and particularly preferably $8 \leq n \leq 15$. When n is no less than 3, interactions of POA groups can be sufficiently exhibited, thereby enabling a thickening property and the like to be further improved. On the other hand, when n is no greater than 20, the POA group can be prevented from being excessively hydrophobic, and thus water solubility of the POA-modified PVA can be improved.

The unsaturated monomer that gives the monomer unit (B) is exemplified by a compound represented by the following general formula (IV).

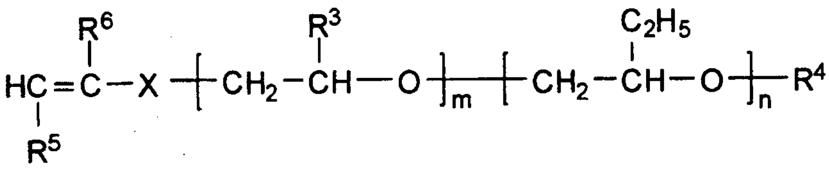 (IV)

In the formula (IV), $R^3$, $R^4$, m and n are as defined in the above general formula (III); $R^5$ represents a hydrogen atom or a $-COOM^1$ group; $M^1$ represents a hydrogen atom, an alkali metal atom or an ammonium group; $R^6$ represents a hydrogen atom, a methyl group or a $-CH_2-COOM^2$ group; $M^2$ represents a hydrogen atom, an alkali metal atom or an ammonium group; X represents -O-, $-CH_2-O-$, -CO-, $-(CH_2)_k-$, - CO-O-, $-CO-NR^7-$ or $-CO-NR^7-CH_2-$; $R^7$ represents a hydrogen atom or an alkyl group having a carbon number of 1 or greater and 4 or less; and $1 \leq k \leq 15$.

$R^4$ represents preferably a hydrogen atom, a methyl group or a butyl group, and more preferably a hydrogen atom or a methyl group. Furthermore, it is particularly preferred that in the unsaturated monomer represented by the general formula (IV), $R^3$ represents a hydrogen atom or a methyl group, $R^4$ represents a hydrogen atom or a methyl group, and $R^5$ represents a hydrogen atom.

In the case in which X is asymmetrical, its orientation is not particularly limited; and, when the side of the POA group is designated as "*", X represents preferably -CONH-*, $-CO-NH-CH_2-$* or -O-, and more preferably -CONH-* or $-CO-NH-CH_2-$*.

For example, in the case in which $R^3$ represents a hydrogen atom or a methyl group, $R^4$ represents a hydrogen atom, and $R^5$ represents a hydrogen atom, the unsaturated monomer represented by the general formula (IV) is exemplified by polyoxyalkylene mono(meth)acrylamide, polyoxyalkylene mono(meth)allyl ether, polyoxyalkylene monovinyl ether and polyoxyalkylene mono(meth)acrylate, and specific examples of the unsaturated monomer include polyoxyethylene polyoxybutylene monoacrylamide, N-methylene polyoxyethylene polyoxybutylene monoacrylamide, polyoxyethylene polyoxybutylene monomethacrylamide, N-methylene polyoxyethylene polyoxybutylene monomethacrylamide, polyoxypropylene polyoxybutylene monoacrylamide, N-methylene polyoxypropylene polyoxybutylene monoacrylamide, polyoxypropylene polyoxybutylene monomethacrylamide, N-methylene polyoxypropylene polyoxybutylene monomethacrylamide, polyoxyethylene polyoxybutylene monoallyl ether, polyoxyethylene polyoxybutylene monomethallyl ether, polyoxyethylene polyoxybutylene monovinyl ether, polyoxypropylene polyoxybutylene monoallyl ether, polyoxypropylene polyoxybutylene monomethallyl ether, polyoxypropylene polyoxybutylene monovinyl ether, polyoxyethylene polyoxybutylene monoacrylate, polyoxyethylene polyoxybutylene monomethacrylate, polyoxypropylene polyoxybutylene monoacrylate, polyoxypropylene polyoxybutylene monomethacrylate, and the like. Of these, polyoxyethylene polyoxybutylene monoacrylamide, N-methylene polyoxyethylene polyoxybutylene monoacrylamide, polyoxyethylene polyoxybutylene monomethacrylamide, N-methylene polyoxyethylene polyoxybutylene monomethacrylamide and polyoxyethylene polyoxybutylene monovinyl ether are preferred, and polyoxyethylene polyoxybutylene monomethacrylamide, N-methylene polyoxyethylene polyoxybutylene monomethacrylamide and polyoxyethylene polyoxybutylene monovinyl ether are more preferred.

In the case in which $R^4$ represents an alkyl group having a carbon number of 1 or greater and 8 or less, the unsaturated monomer represented by the general formula (IV) is specifically exemplified by those derived by substituting with an alkoxy group having a carbon number of 1 or greater and 8 or less, a hydroxyl group at the end of the unsaturated monomer exemplified for the case in which $R^4$ in the above general formula (IV) represents a hydrogen atom. Of these, unsaturated monomers derived by substituting with a methoxy group a hydroxyl group at the end of polyoxyethylene polyoxybutylene monomethacrylamide, N-methylene polyoxyethylene polyoxybutylene monomethacrylamide, and polyoxyethylene polyoxybutylene monovinyl ether are preferred, and unsaturated monomers derived by substituting with a methoxy group a hydroxyl group at the end of polyoxyethylene polyoxybutylene monomethacrylamide and N-methylene polyoxyethylene polyoxybutylene monomethacrylamide are more preferred.

The percentage content of the monomer unit having an alkyl group having a carbon number of 2 or greater and 29 or less in the modified PVA (percentage of modification) is no less than 0.05 mol% and no greater than 5 mol%. Furthermore, the percentage content is preferably no less than 0.1 mol%, and more preferably no less than 0.2 mol%. Moreover, the percentage content is preferably no greater than 2 mol%, more preferably no greater than 1.5 mol, and still more preferably no greater than 1 mol%. Herein, the percentage content of the monomer unit (percentage of modification) is a proportion (mol%) of the number of moles of the monomer unit to the number of moles of all the monomer units constituting the modified PVA.

When the percentage content of the monomer unit exceeds 5 mol%, the proportion of the hydrophobic group comprised per molecule of the modified PVA is so high that water solubility of the modified PVA decreases. On the other hand, when the percentage content of the monomer unit is less than 0.05 mol%, although the modified PVA has superior water solubility, small number of alkyl units comprised in the modified PVA leads to failure in sufficiently exhibiting physical properties (thickening property, etc.) resulting from the modification.

The percentage content of the monomer unit may be determined from the modified PVA; however, in the case, for example, in which the modified PVA is produced by saponifying a corresponding modified vinyl ester polymer as described later, content of the monomer unit may be determined from the modified vinyl ester polymer. In any case, the content of the monomer unit may be determined by proton NMR. Specifically, for example, when the content of the monomer unit is determined from the modified vinyl ester polymer, purification by reprecipitation of the modified vinyl ester polymer with n-hexane/ acetone may be sufficiently carried out three or more times, and thereafter dried at 50°C under a reduced pressure for 2 days to produce a sample for an analysis, which may be dissolved in $CDCl_3$, etc., followed by subjecting to proton NMR to execute the measurement. It is to be noted that when the modified PVA is obtained by saponifying the modified vinyl ester polymer, the percentage content of the monomer unit is usually not altered after the saponification.

A method for calculating the percentage content of the monomer unit may be specifically explained as follows. That is, for example, in the case in which the modified vinyl ester polymer subjected to the measurement does not include a modified monomer unit other than the monomer unit (A) represented by the above general formula (I), and $R^1$ is linear and $R^2$ represents a hydrogen atom, the percentage content of the monomer unit may be calculated in accordance with the following formula from the area of a peak $\alpha$ (4.7 to 5.2 ppm) derived from the methine in main chain, of the modified vinyl ester polymer and the area of a peak $\beta$ (0.8 to 1.0 ppm) derived from the terminal methyl group of the alkyl group $R^1$.

$$\text{Percentage content of the monomer unit (mol\%)} = [(\text{area of peak } \beta/ 3)/\{\text{area of peak } \alpha + (\text{area of peak } \beta/ 3)\}] \times 100$$

Also in the case in which the modified vinyl ester polymer has a structure other than the aforementioned structure, the percentage content of the monomer unit can be easily calculated by appropriately changing the target peak for the calculation and the formula of calculation.

The viscosity average degree of polymerization of the modified PVA is preferably no less than 200 and no greater than 5,000. It is to be noted that the viscosity average degree of polymerization may be merely referred to as "degree of polymerization". The degree of polymerization exceeding 5,000 leads to a loss of practicability since productivity of the modified PVA is reduced. To the contrary, when the degree of polymerization is less than 200, distinctive physical properties of the modified PVA such as a thickening property may not be sufficiently exhibited. In light of enhancement of the thickening property and the like, the lower limit of the degree of polymerization is preferably 500 and more preferably 1,000.

The viscosity average degree of polymerization is determined in accordance with JIS K6726. More specifically, the modified PVA is resaponified and purified, and thereafter the viscosity average degree is determined according to the following formula from an intrinsic viscosity ($\eta$) (unit: deciliter /g) as determined in water at 30°C.

$$\text{viscosity average degree of polymerization} = ((\eta) \times 10^3/8.29)^{(1/0.62)}$$

The degree of saponification of the modified PVA is necessarily no less than 20 mol% and no greater than 99.99 mol%, preferably no less than 40 mol% and no greater than 99.9 mol%, and more preferably no less than 50 mol% and no greater than 99.9 mol%. When the degree of saponification is less than 20 mol%, water solubility and/or a thickening property may be impaired. To the contrary, the degree of saponification exceeding 99.99 mol% leads to a loss of practicability since productivity of the modified PVA becomes difficult. It is to be noted that the degree of saponification of the modified PVA is a value obtained by measuring in accordance with JIS K6726.

In the case in which the modified PVA comprises the monomer unit (B), the content of the monomer unit (B) is preferably no greater than 50% by mass, more preferably no greater than 30% by mass, and particularly preferably no greater than 15% by mass. When the content of the monomer unit (B) exceeds 50% by mass, hydrophobicity of the modified PVA increases, whereby the solubility into water-containing solvent may be deteriorated. The lower limit of the content is preferably 2.5% by mass.

Herein, the content of the monomer unit (B) is represented by a mass fraction of the monomer unit (B) with respect to the modified PVA, and is a value calculated from the structure of the monomer unit (B), the aforementioned percentage content (percentage of modification) and the like. Even if the aforementioned percentage content (percentage of modification) is equal, the content of the monomer unit (B) increases along with, for example, an increase in a degree of saponification, or an increase in the number n of the repeating units of the unit 2.

When the viscosity of a 4% by mass aqueous solution of the modified PVA is measured with a BL type viscometer under a condition involving a rotation frequency of a rotor of 6 rpm, a ratio $\eta_2/\eta_1$, i.e., a viscosity $\eta_2$ at 40°C to a viscosity

$\eta_1$ at 20°C, is preferably no less than 0.8. The viscosity ratio $\eta_2/\eta_1$ is more preferably no less than 1.0, still more preferably no less than 1.5, and particularly preferably no less than 2.0. When the viscosity ratio $\eta_2/\eta_1$ being less than 0.8, interactions of hydrophobic groups may decrease, whereby physical properties accompanied by the modification may not be highly exhibited. It is to be noted that the upper limit value of the viscosity ratio $n_2/\eta_1$ may be, for example, 10.

In addition, with regard to the modified PVA, provided that a viscosity of a 4% by mass aqueous solution of corresponding unmodified PVA having a similar degree of polymerization as measured under a condition involving a rotation frequency of a rotor of 6 rpm at 20°C is defined as $\eta_3$, a viscosity ratio $\eta_1/\eta_3$ is preferably greater than 1.2, more preferably greater than 1.5, still more preferably greater than 2.0, and particularly preferably greater than 5.0. The unmodified PVA having a similar degree of polymerization as referred to herein means an unmodified PVA having a degree of polymerization falling within the range of 0.95 times to 1.05 times the degree of polymerization of the POA-modified PVA. It is to be noted that the upper limit value of the viscosity ratio $\eta_1/\eta_3$ may be, for example, 10,000.

The concentration of the modified PVA in the modified PVA solution is not particularly limited, and preferably no less than 5% by mass, more preferably no less than 7% by mass, and still more preferably no less than 10% by mass. In addition, concentration of the modified PVA is preferably no greater than 70% by mass, more preferably no greater than 50% by mass, and still more preferably no greater than 20% by mass. According to the modified PVA solution, superior handleability is achieved since an elevation of the viscosity, etc., can be prevented even if the percentage content of the modified PVA is increased in this manner.

Method for Producing Modified PVA

A method for producing the modified PVA described above is not particularly limited, and is preferably a method of saponifying a modified vinyl ester polymer (copolymer) obtained by carrying out a process of e.g., copolymerizing an unsaturated monomer having an alkyl group having a carbon number of 2 or greater and 29 or less with a vinyl ester monomer. In this process, the copolymerization is suitably carried out in an alcohol solvent or in the absence of a solvent.

The unsaturated monomer having an alkyl group having a carbon number of 2 or greater and 29 or less may be exemplified by compounds described above.

Examples of the vinyl ester monomer include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, and the like. Of these, vinyl acetate is preferred.

In copolymerizing an unsaturated monomer having an alkyl group having a carbon number of 2 or greater and 29 or less with the vinyl ester monomer, other monomer may be copolymerized within the range not to depart from the principles of the present invention. Examples of the monomer which may be used include:

nitriles such as acrylonitrile and methacrylonitrile;
halogenated vinyls such as vinyl chloride and vinyl fluoride;
halogenated vinylidenes such as vinylidene chloride and vinylidene fluoride;
allyl compounds such as allyl acetate, 2,3-diacetoxy-1-allyloxypropane and allyl chloride;
vinylsilyl compounds such as vinyltrimethoxysilane; and the like.

The amount of the monomer other than the unsaturated monomer having an alkyl group having a carbon number of 2 or greater and 29 or less and the vinyl ester monomer used is preferably no greater than 20 mol%, more preferably no greater than 5 mol%, and still more preferably 0 mol% with respect to the entire monomer used for the copolymerization. When the amount of the other monomer used exceeds 20 mol%, physical properties, compatibility with the aforementioned organic solvent and/or water, and the like of the modified PVA may be affected.

In addition, upon the copolymerization reaction, for the purpose of adjusting the degree of polymerization of the resultant modified vinyl ester polymer, and the like, the copolymerization may be carried out in the presence of a chain transfer agent within a range not leading to impairment of the gist of the present invention. Examples of the chain transfer agent include:

aldehydes such as acetaldehyde and propionaldehyde;
ketones such as acetone and methyl ethyl ketone;
mercaptans such as 2-hydroxyethanethiol;
halogenated hydrocarbons such as trichloroethylene and perchloroethylene;
phosphinic acid salts such as sodium phosphinate monohydrate; and the like. Of these, aldehydes and ketones are suitably used.

The amount of the chain transfer agent added may be determined in accordance with the chain transfer constant of the chain transfer agent added, and the intended degree of polymerization of the vinyl ester polymer, and is preferably

no less than 0.1% by mass and no greater than 10% by mass with respect to the vinyl ester monomer, in general.

The temperature employed when the copolymerization is carried out is preferably 0 to 200°C, and more preferably 30 to 140°C. When the temperature in carrying out the copolymerization is lower than 0°C, a sufficient polymerization rate is not likely to be attained. In addition, when the temperature in carrying out the polymerization is higher than 200°C, a modified PVA having the percentage of modification specified according to the present invention is not likely to be obtained. As a method for adjusting the temperature employed in carrying out the copolymerization to 0 to 200°C, for example, a method in which the polymerization rate is regulated to make a balance between heat generation resulting from the polymerization and heat radiation from the surface of the reaction vessel, a method of adjusting the temperature by an external jacket using an appropriate heating medium, and the like may be exemplified, and the latter method is preferred in light of safety.

A polymerization system employed in carrying out the copolymerization may involve any of batch polymerization, semi-batch polymerization, continuous polymerization and semi-continuous polymerization. As the polymerization method, a well-known arbitrary process such as a bulk polymerization process, a solution polymerization process, a suspension polymerization process or an emulsion polymerization process may be employed. Among these, a bulk polymerization process in which polymerization is carried out in the absence of a solvent, or a solution polymerization process in which polymerization is carried out in an alcohol solvent, is suitably employed. In the case in which production of a modified vinyl ester polymer having a high degree of polymerization is intended, an emulsion polymerization process is suitably employed.

Examples of the alcohol solvent which may be used include methanol, ethanol, n-propanol and the like, but not limited thereto. Also, these solvents may be used as a mixture of two or more types thereof.

As an initiator for use in the copolymerization, a conventionally well-known azo type initiator, peroxide type initiator, redox type initiator or the like may be appropriately selected in accordance with the polymerization method. Examples of the azo type initiator include 2,2'-azobisisobutyronitrile, 2,2'-azobis(2,4-dimethylvaleronitrile), 2,2'-azobis (4-methoxy-2,4-dimethylvaleronitrile) and the like. Examples of the peroxide type initiator include percarbonate compounds such as diisopropyl peroxydicarbonate, di-(2-ethylhexyl) peroxydicarbonate and diethoxyethyl peroxydicarbonate; perester compounds such as t-butyl peroxyneodecanate, α-cumyl peroxyneodecanate and t-butyl peroxydecanate; acetyl cyclohexylsulfonyl peroxide; 2,4,4-trimethylpentyl-2-peroxyphenoxyacetate, and the like. Furthermore, the foregoing initiator may be combined with potassium persulfate, ammonium persulfate, hydrogen peroxide or the like to provide an initiator. In addition, as the redox type initiator, a combination of the aforementioned peroxide with a reducing agent such as sodium hydrogen sulfite, sodium hydrogen carbonate, tartaric acid, L-ascorbic acid or Rongalite may be exemplified.

It is to be noted that when the copolymerization is carried out at a comparatively high temperature, coloring, etc., of the finally obtained modified PVA may be found resulting from degradation of the vinyl ester monomer, or the like. In such a case, an antioxidant such as tartaric acid may be added to the polymerization system for preventing coloring in an amount of about 1 to 100 ppm with respect to the vinyl ester monomer.

As a saponification reaction of the modified vinyl ester polymer obtained by the copolymerization, an alcoholysis reaction or hydrolysis reaction may be employed in which a well-known basic catalyst such as sodium hydroxide, potassium hydroxide or sodium methoxide, or an acidic catalyst such as p-toluenesulfonic acid is used. The solvent which may be used in this reaction is exemplified by: alcohols such as methanol and ethanol; esters such as methyl acetate and ethyl acetate; ketones such as acetone and methyl ethyl ketone; aromatic hydrocarbons such as benzene and toluene, and the like. These may be used either alone, or in combination of two or more thereof. Among these, carrying out a saponification reaction using methanol or a mixture solution of methanol and methyl acetate as a solvent, and sodium hydroxide as a catalyst is preferred due to the convenience.

Organic Solvent

The organic solvent has, in terms of Hansen solubility parameters, δd (dispersion parameter) of no less than 13 $MPa^{0.5}$ and no greater than 18 $MPa^{0.5}$, δp (polarity parameter) of no less than 4 $MPa^{0.5}$ and no greater than 9 $MPa^{0.5}$, and δh (hydrogen bond parameter) of no less than 9 $MPa^{0.5}$ and no greater than 13 $MPa^{0.5}$. The organic solvent is preferably miscible with water. When Hansen solubility parameters of the organic solvent do not fall within the above ranges, a viscosity of the resultant modified PVA solution may be so high that problems of impairment of handling characteristics as well as failure in exhibiting functions as a solution and the like may be caused. In terms of the Hansen solubility parameter, δd is preferably no less than 14 $MPa^{0.5}$, and is preferably no greater than 17 $MPa^{0.5}$, more preferably no greater than 16 $MPa^{0.5}$. In terms of the Hansen solubility parameter, δp is preferably no less than 5 $MPa^{0.5}$, and is preferably no greater than 8 $MPa^{0.5}$, more preferably no greater than 7 $MPa^{0.5}$. In terms of the Hansen solubility parameter, δh is more preferably no greater than 11 $MPa^{0.5}$. Preferred combinations of each range of the δd and δp may be, for example, δd being no less than 14 $MPa^{0.5}$ and no greater than 17 $MPa^{0.5}$, and δp being no less than 4 $MPa^{0.5}$ and no greater than 8 $MPa^{0.5}$.

The Hansen solubility parameter is a value obtained by dividing a solubility parameter introduced by Hildebrand into three components of a dispersion parameter $\delta d$, a polarity parameter $\delta p$ and a hydrogen bond parameter $\delta h$, and thus represented in a three-dimensional space. The dispersion parameter $\delta d$ is an indicative of effects of nonpolar interactions, the polarity parameter $\delta p$ is an indicative of effects of dipole-dipole force, and the hydrogen bond parameter $\delta h$ is an indicative of effects of hydrogen bonding force. Hansen solubility parameter values of a large number of solvents and resins have been determined, and described in, for example, Wesley L. Archer (author), Industrial Solvents Handbook. In the present invention, the Hansen solubility parameter employed is a value derived with reference to Hansen Solubility Parameters: A User's Handbook.

Such organic solvents having the specific Hansen solubility parameters are highly miscible with the modified PVA above specified and water. Therefore, the modified PVA solution can be also prepared to give high concentrations. In addition, due to having the specific Hansen solubility parameter, the organic solvent is believed to inhibit interactions of hydrophobic groups comprised in the modified PVA specified above. Therefore, the modified PVA can prevent an elevation of the viscosity, etc., even in cases in which the concentration is increased. Furthermore, interactions between hydrophobic groups can be recovered by dilution with water, as well as mixing with a dispersion liquid containing a surfactant and the like in the modified PVA solution, thereby enabling physical properties of the modified PVA such as high viscosity to be exhibited. Particularly, when the modified PVA is mixed with a dispersion liquid containing a surfactant, it is believed that the organic solvent having specific Hansen solubility parameters is dissolved into emulsion particles and interactions between hydrophobic groups are consequently recovered.

The organic solvent is not particularly limited as long as the Hansen solubility parameters fall within the above ranges, and preferably monoalkyl ethers of a polyhydric alcohol such as diethylene glycol monobutyl ether (DEMB having $\delta d$ of 16.0, $\delta p$ of 7.0 and $\delta h$ of 10.6), dipropylene glycol monobutyl ether (DPMB having $\delta d$ of 15.7, $\delta p$ of 6.5 and $\delta h$ of 10.0), dipropylene glycol monomethyl ether (DPM having $\delta d$ of 15.5, $\delta p$ of 5.7 and $\delta h$ of 11.2), tripropylene glycol monomethyl ether (TPM having $\delta d$ of 15.3, $\delta p$ of 5.5 and $\delta h$ of 10.4), ethylene glycol monobutyl ether (EMB having $\delta d$ of 16.0, $\delta p$ of 5.1 and $\delta h$ of 12.3), ethylene glycol mono-t-butyl ether (ETB having $\delta d$ of 15.3, $\delta p$ of 6.1 and $\delta h$ of 10.8), propylene glycol monomethyl ether (PM having $\delta d$ of 15.6, $\delta p$ of 6.3 and $\delta h$ of 11.6) or propylene glycol monobutyl ether (PB having $\delta d$ of 15.3, $\delta p$ of 4.5 and $\delta h$ of 9.2), and the like. Preferred are monoalkyl ethers of glycol.

The monoalkyl ethers of glycol are more preferably compounds represented by the following general formula (V):

$$HO-(C_2H_4-O)_n-C_2H_4-O-R^8 \qquad (V)$$

In the above general formula (V), $R^8$ represents an alkyl group having a carbon number of 1 or greater and 6 or less, and is preferably a butyl group or a t-butyl group; and n is an integer of 0 to 3.

When the modified PVA comprises the monomer unit (A) as the monomer unit having an alkyl group having a carbon number of 2 or greater and 29 or less, n is preferably 1. Furthermore, in this case, DEMB is particularly preferred among the compounds represented by the above general formula (V).

On the other hand, when the modified PVA comprises the monomer unit (B) as the monomer unit having an alkyl group having a carbon number of 2 or greater and 29 or less, n is preferably 0. Additionally, in this case, ETB is particularly preferred among the compounds represented by the above general formula (V).

The mass ratio of the organic solvent to water (organic solvent: water) is preferably no less than 5:95 and no greater than 40:60, and more preferably no less than 10:90 and no greater than 30:70. According to the modified PVA solution, when the mass ratio of the organic solvent to water comprised falls within the above range, high solubility and superior adjustability of the viscosity of the modified PVA can be both attained. When the ratio of the organic solvent is less than the above lower limit, an elevation of the viscosity may be remarkable. To the contrary, when the ratio of the organic solvent comprised exceeds the upper limit, the solubility of the modified PVA may be lowered.

Additives

In addition to the modified PVA, the organic solvent specified above and water, the modified PVA solution may comprise additives such as various types of plasticizers, surfactants, defoaming agents, ultraviolet ray absorbing agents, fillers, pH adjusting agents and water proofing agents, within the range not leading to impairment of the principles of the present invention. The content of these additives is preferably no greater than 50 parts by mass with respect to 100 parts by mass of the modified PVA.

In addition, the modified PVA may comprise other water soluble macromolecules such as well-known various types of PVAs, a starch, carboxymethyl cellulose, methyl cellulose, hydroxymethyl cellulose, hydroxyethyl cellulose and hydroxypropyl cellulose, similarly within the range not leading to impairment of the principles of the present invention. The content of these other water soluble macromolecules is preferably no greater than 50 parts by mass with respect to 100 parts by mass of the modified PVA.

Intended Usage, etc.

According to the modified PVA solution, an elevation of the viscosity is prevented even in cases in which the concentration is increased. In addition, superior adjustability of physical properties such as viscosity can be achieved such as capability of increasing the viscosity by mixing, etc., with a dispersion liquid containing a surfactant. Therefore, the modified PVA solution can be suitably used as a thickener and the like. The thickener can be used in use for which an increase in the viscosity is intended of, for example, coating materials, cement, concrete, adhesives, cosmetics, paints, paper processings, binding materials and the like.

Method for Producing a Modified PVA Solution

The method of the present invention for producing the modified PVA solution comprises the step of mixing a modified PVA, an organic solvent and water,
the modified PVA comprising the monomer unit having an alkyl group having a carbon number of 2 or greater and 29 or less; and having a percentage content of the monomer unit being no less than 0.05 mol% and no greater than 5 mol%, and a degree of saponification of the modified PVA being no less than 20 mol% and no greater than 99.99 mol%, and in terms of Hansen solubility parameters of the organic solvent, $\delta d$ being no less than 13 $MPa^{0.5}$ and no greater than 18 $MPa^{0.5}$, $\delta p$ being no less than 4 $MPa^{0.5}$ and no greater than 9 $MPa^{0.5}$, and $\delta h$ being no less than 9 $MPa^{0.5}$ and no greater than 13 $MPa^{0.5}$.
According to the method for producing a modified PVA solution, a modified PVA solution can be obtained that has a high concentration, and enables physical properties such as viscosity to be adjusted. Details of the modified PVA and organic solvent are as described above.
The process for mixing the modified PVA, the organic solvent and water is not particularly limited, and a modified PVA may be added to a mixed solvent prepared by mixing the organic solvent with water, or the organic solvent may be added to the aqueous modified PVA solution.
It is to be noted that stirring by a well-known method, and/or stirring with heating may be carried out in order to increase the solubility. The temperature of the solution in heating is, for example, no less than 80°C and no greater than 95°C.

EXAMPLES

Hereinafter, the present invention will be explained in detail by way of Examples. It is to be noted in the following Production Examples, Examples, Reference Examples and Comparative Examples, "part" and "%" are on mass basis unless otherwise specified particularly.
Evaluations of PVA (modified PVA, etc.) obtained by Production Examples described above were made in accordance with the following methods.

Degree of Polymerization of PVA

The degree of polymerization of PVA was determined in accordance with the method described in JIS K6726.

Percentage Content of the Monomer Unit Having an Alkyl Group Having a Carbon Number of 2 or Greater and 29 or Less in PVA (hereinafter, may be also merely referred to as "percentage of modification")

The content was determined in accordance with the aforementioned method in which the proton NMR was employed. It is to be noted that the proton NMR was carried out using JEOL GX-500 at 500 MHz.

Degree of Saponification of PVA

The degree of saponification of PVA was determined in accordance with the method described in JIS K6726.

Viscosity of Aqueous PVA Solution

PVA in an amount of 4 g was added to 96 g of distilled water at room temperature, and the mixture was stirred for 30 min. The temperature of the aqueous PVA solution thus obtained was elevated to 90°C and the mixture was stirred for 1 hour at the same temperature, followed by cooling to the room temperature. Next, the viscosity of the aqueous solution was measured using a BL type viscometer (20°C, 6 rpm).

Production of PVA

Production Example 1-1: Production of PVA 1-1

Into a 3 L reaction vessel equipped with a stirrer, a reflux condenser, a nitrogen inlet tube, a monomer dripping port and an addition port of the initiator were charged 750 g of vinyl acetate, 250 g of methanol and 1.1 g of N-octadecylmethacrylamide as an unsaturated monomer having an alkyl group. Replacement with nitrogen gas in the system was carried out for 30 min by bubbling nitrogen. Also, a comonomer solution was prepared as a delay solution by dissolving N-octadecylmethacrylamide in methanol to give a concentration of 5%, and subjected to replacement with nitrogen gas by bubbling of nitrogen gas. An elevation of the temperature of the reaction vessel was started, and 0.25 g of 2,2'-azobisisobutyronitrile (AIBN) was added to initiate the polymerization when an internal temperature of 60°C was attained. Polymerization was allowed at 60°C for 3 hours while adding the delay solution dropwise such that the monomer composition (proportion of vinyl acetate and N-octadecylmethacrylamide) was kept constant in the polymerization solution, followed by cooling to stop the polymerization. The total amount of the monomer (N-octadecylmethacrylamide) added until the polymerization was stopped was 4.8 g. In addition, the solid content concentration was 29.9% when the polymerization was stopped. Subsequently, unreacted vinyl acetate was removed while adding methanol at 30°C under a reduced pressure at intervals to obtain a methanol solution of a modified vinyl ester polymer (modified PVAc) (concentration: 35%). Furthermore, 27.9 g of an alkali solution (10% sodium hydroxide solution in methanol) was added to 771.4 g of a methanol solution of the modified PVAc (containing 200.0 g of the modified PVAc in the solution) prepared by adding methanol thereto to allow for saponification (the concentration of the modified PVAc in the saponification solution: 25%; and the molar ratio of sodium hydroxide to the vinyl acetate monomer unit in the modified PVAc: 0.03). Since gelatinous matter was produced about 1 min after the alkali solution was added, the gelatinous matter was ground with a grinder, and left to stand at 40°C for 1 hour to allow saponification to proceed. Thereafter, 500 g of methyl acetate was added to neutralize remaining alkali. After confirming the completion of neutralization using a phenolphthalein indicator, the mixture was filtered to obtain a white solid. To the white solid was added 2,000 g of methanol, and left to stand at room temperature for 3 hours to permit washing. After this washing operation was repeated three times, white solid obtained by deliquoring through centrifugation was dried by leaving to stand in a dryer at 65°C for 2 days, whereby a modified PVA (PVA 1-1) was obtained. PVA 1-1 had a degree of polymerization of 1,700, a degree of saponification of 98.5 mol%, and a percentage of modification of 0.4 mol%.

Production Examples 1-2 to 1-18: Production of PVAs 1-2 to 1-18

Various types of modified PVAs (PVAs 1-2 to 1-18) were produced by a method similar to that of Production Example 1-1 except that: polymerization conditions such as the amount of vinyl acetate and methanol charged, and the type, amount of addition and the like of the unsaturated monomer having an alkyl group used in the polymerization; and saponification conditions such as the concentration of the modified PVAc, the molar ratio of sodium hydroxide with respect to the vinyl acetate monomer unit in saponification were changed as shown in Table 1.

Production Example 1-19: Production of PVA 1-19

Into a 3 L reaction vessel equipped with a stirrer, a reflux condenser, a nitrogen inlet tube and an addition port of the initiator were charged 900 g of vinyl acetate and 100 g of methanol. Replacement with nitrogen gas in the system was carried out for 30 min by bubbling nitrogen. An elevation of the temperature of the reaction vessel was started, and 0.25 g of 2,2'-azobisisobutyronitrile (AIBN) was added to initiate the polymerization when an internal temperature of 60°C was attained. After polymerization was allowed at 60°C for 3 hours, the mixture was cooled to stop the polymerization. The solid content concentration was 31.0% when the polymerization was stopped. Subsequently, unreacted vinyl acetate was removed while adding methanol at 30°C under a reduced pressure at intervals to obtain a methanol solution of unmodified polyvinyl acetate (unmodified PVAc) (concentration: 30%). Furthermore, 27.9 g of an alkali solution (10% sodium hydroxide solution in methanol) was added to 971.1 g of a methanol solution of unmodified PVAc (containing 200.0 g of unmodified PVAc in the solution) prepared by adding methanol thereto to allow for saponification (the concentration of the unmodified PVAc in the saponification solution: 20%; and the molar ratio of sodium hydroxide to the vinyl acetate monomer unit in the unmodified PVAc: 0.03). Since gelatinous matter was produced about 1 min after the alkali solution was added, the gelatinous matter was ground with a grinder, and left to stand at 40°C for 1 hour to allow saponification to proceed. Thereafter, 500 g of methyl acetate was added to neutralize remaining alkali. After confirming the completion of neutralization using a phenolphthalein indicator, the mixture was filtered to obtain a white solid. To the white solid was added 2,000 g of methanol, and left to stand at room temperature for 3 hours to permit washing. After this washing operation was repeated three times, white solid obtained by deliquoring through centrifugation was dried by leaving to stand in a dryer at 65°C for 2 days, whereby an unmodified PVA (PVA 1-19) was obtained. PVA 1-19 had

a degree of polymerization of 3,000, and a degree of saponification of 98.5 mol%.

Production Examples 1-20 to 1-24: Production of PVAs 1-20 to 1-24

Various types of unmodified PVAs (PVAs 1-20 to 1-24) were produced by a method similar to that of Production Example 1-19 except that: polymerization conditions such as the amount of vinyl acetate and methanol charged, and the type, amount of addition and the like of the unsaturated monomer having an alkyl group used in the polymerization; and saponification conditions such as the concentration of the unmodified PVAc, the molar ratio of sodium hydroxide with respect to the vinyl acetate monomer unit in saponification were changed as shown in Table 1.

[Table 1]

| | PVA | Charging 1) | | | | | Percentage of polymerization | Saponification conditions | |
|---|---|---|---|---|---|---|---|---|---|
| | | vinyl acetate | methanol (before starting polymerization) | unsaturated monomer having an alkyl group | | | | PVAc concentration | NaOH molar 2) ratio |
| | | | | $R^1$ | $R^2$ | amount | | | |
| | | (g) | (g) | | | (g) | (%) | (%) | |
| Production Example 1-1 | PVA 1-1 | 750 | 250 | $C_{18}H_{37}$ | $CH_3$ | 4.8 | 40 | 25 | 0.03 |
| Production Example 1-2 | PVA 1-2 | 850 | 150 | $C_{18}H_{37}$ | $CH_3$ | 4.9 | 30 | 25 | 0.03 |
| Production Example 1-3 | PVA 1-3 | 900 | 100 | $C_{18}H_{37}$ | $CH_3$ | 4.9 | 30 | 20 | 0.03 |
| Production Example 1-4 | PVA 1-4 | 400 | 600 | $C_{18}H_{37}$ | $CH_3$ | 3.4 | 50 | 30 | 0.03 |
| Production Example 1-5 | PVA 1-5 | 100 | 900 | $C_{18}H_{37}$ | $CH_3$ | 1.1 | 50 | 40 | 0.03 |
| Production Example 1-6 | PVA 1-6 | 750 | 250 | $C_{18}H_{37}$ | $CH_3$ | 4.8 | 40 | 25 | 0.0075 |
| Production Example 1-7 | PVA 1-7 | 750 | 250 | $C_{18}H_{37}$ | $CH_3$ | 4.8 | 40 | 25 | 0.007 |
| Production Example 1-8 | PVA 1-8 | 550 | 450 | $C_{18}H_{37}$ | $CH_3$ | 3.6 | 40 | 25 | 0.005 |
| Production Example 1-9 | PVA 1-9 | 400 | 600 | $C_{18}H_{37}$ | $CH_3$ | 3.4 | 50 | 30 | 0.002 |
| Production Example 1-10 | PVA 1-10 | 750 | 250 | $C_{18}H_{37}$ | $CH_3$ | 1.2 | 40 | 25 | 0.0078 |
| Production Example 1-11 | PVA 1-11 | 750 | 250 | $C_{12}H_{25}$ | $CH_3$ | 12.0 | 40 | 25 | 0.007 |
| Production Example 1-12 | PVA 1-12 | 750 | 250 | $C_8H_{17}$ | $CH_3$ | 19.3 | 40 | 25 | 0.0068 |

(continued)

| | PVA | Charging 1) | | | | | Percentage of polymerization | Saponification conditions | |
|---|---|---|---|---|---|---|---|---|---|
| | | vinyl acetate | methanol (before starting polymerization) | unsaturated monomer having an alkyl group | | | | PVAc concentration | NaOH molar 2) ratio |
| | | | | $R^1$ | $R^2$ | amount | | | |
| | | (g) | (g) | | | (g) | (%) | (%) | |
| Production Example 1-13 | PVA 1-13 | 750 | 250 | $C_8H_{17}$ | $CH_3$ | 42.1 | 40 | 25 | 0.006 |
| Production Example 1-14 | PVA 1-14 | 750 | 250 | $C_5H_{11}$ | $CH_3$ | 2.4 | 40 | 25 | 0.03 |
| Production Example 1-15 | PVA 1-15 | 750 | 250 | $C_{10}H_{21}$ | $CH_3$ | 3.6 | 40 | 25 | 0.03 |
| Production Example 1-16 | PVA 1-16 | 750 | 250 | $C_{26}H_{53}$ | $CH_3$ | 7.1 | 40 | 25 | 0.03 |
| Production Example 1-17 | PVA 1-17 | 750 | 250 | $C_{30}H_{61}$ | $CH_3$ | 8.2 | 40 | 25 | 0.03 |
| Production Example 1-18 | PVA 1-18 | 750 | 250 | $C_{18}H_{37}$ | H | 4.8 | 40 | 25 | 0.0075 |
| Production Example 1-19 | PVA 1-19 | 900 | 100 | - | | | 35 | 20 | 0.03 |
| Production Example 1-20 | PVA 1-20 | 750 | 250 | - | | | 40 | 25 | 0.03 |
| Production Example 1-21 | PVA 1-21 | 850 | 150 | - | | | 30 | 25 | 0.03 |
| Production Example 1-22 | PVA 1-22 | 400 | 600 | - | | | 50 | 30 | 0.03 |
| Production Example 1-23 | PVA 1-23 | 100 | 900 | - | | | 50 | 40 | 0.03 |

(continued)

| | PVA | Charging [1] | | | | | Percentage of polymerization | Saponification conditions | |
|---|---|---|---|---|---|---|---|---|---|
| | | vinyl acetate | methanol (before starting polymerization) | unsaturated monomer having an alkyl group | | | | PVAc concentration | NaOH molar [2] ratio |
| | | | | $R^1$ | $R^2$ | amount | | | |
| | | (g) | (g) | | | (g) | (%) | (%) | |
| Production Example 1-24 | PVA 1-24 | 550 | 450 | - | | | 40 | 25 | 0.03 |

1) In all Production Examples, 0.25 g of 2,2'-azobisisobutyronitrile (AIBN) was used as a polymerization initiator.
2) Molar ratio of sodium hydroxide (NaOH) to vinyl acetate monomer unit in PVAc

Example 1-1

To a mixture of 18 g of diethylene glycol monobutyl ether (DEMB) as an organic solvent and 72 g of distilled water (organic solvent: water = 20:80) was added 10 g of PVA 1-1 at room temperature, and the mixture was stirred using THREE-ONE MOTOR for 30 min. Next, the temperature of this solution was elevated with stirring to 90°C, and the stirring was continued as is for 1 hr. Thereafter, the mixture was cooled to room temperature to obtain a PVA 1-1 solution having a concentration of 10%.

Solubility of PVA

The state of the PVA 1-1 solution was visually observed, and when determined in accordance with the following criteria, the evaluation was made as "A".

A: transparent solution
B: slightly turbid
C: turbid solution
D: including undissolved residues

Evaluation of Solution: Viscosity of PVA Solution

The viscosity of the PVA 1-1 solution measured using a BL type viscometer at a rotation frequency of a rotor of 6 rpm, and at 20°C was 2,400 mPa·s.

Em Evaluation: Viscosity of Ethylene-Vinyl Acetate Copolymer Emulsion (Test for Increasing Viscosity)

To 100 parts of an ethylene-vinyl acetate copolymer emulsion (OM-4200NT, manufactured by Kuraray Co., Ltd., having a concentration of 45% and a viscosity of 100 mPa·s) were added 13.5 parts of the PVA 1-1 solution (solid content of PVA being 3.0 parts with respect to 100 parts of the solid content of the emulsion). The viscosity at 20°C of the emulsion solution was 18,000 mPa·s when measured using a BL type viscometer at a rotation frequency of a rotor of 6 rpm.

Comparison with Unmodified PVA Solution

To a mixture of 18 g of diethylene glycol monobutyl ether (DEMB) as an organic solvent and 72 g of distilled water (organic solvent: water = 20:80) was added 10 g of PVA 1-20 (unmodified PVA having a degree of polymerization similar to that of PVA 1-1) at room temperature, and the mixture was stirred using THREE-ONE MOTOR for 30 min. Next, the temperature of this solution was elevated with stirring to 90°C, and the stirring was continued as is for 1 hr. Thereafter, the mixture was cooled to room temperature to obtain a PVA 1-20 solution having a concentration of 10%. When tests were performed using this solution in similar manners to Example 1-1, the solution viscosity was 1,500 mPa·s, and the emulsion viscosity was 120 mPa·s. The solution viscosity of PVA 1-1 was 1.6 times the solution viscosity of the PVA 1-20, whereas the viscosity after addition to the emulsion was 150 times.

Examples 1-2 to 1-21, and Comparative Examples 1-1 to 1-8

Tests similar to those of Example 1-1 were performed except that PVA and the organic solvent used, and a mass ratio of the organic solvent to water were changed as shown in Table 2.

It is to be noted that each Hansen solubility parameter of the organic solvent shown in Table 2 was abstracted from Hansen Solubility Parameters: A User's Handbook.

The results of the foregoing are shown in Table 2. It is to be noted that the viscosity ratio for Evaluation of Solution and Em Evaluation in Table 2 is a ratio with respect to that of unmodified PVA having a similar degree of polymerization. In addition, Table 2 shows as Reference Examples 1-1 to 1-6, results of the solution viscosity and Em viscosity of unmodified PVAs (PVAs 1-19 to 1-24) determined in similar manners to Evaluation of Solution and Em Evaluation described in Example 1-1.

[Table 2]

| | PVA | | | | | Organic solvent | | | | Organic solvent: water (mass ratio) | Solubility | Evaluation of Solution | | Em Evaluation | |
|---|---|---|---|---|---|---|---|---|---|---|---|---|---|---|---|
| | type | degree of polymerization | percentage of modification | degree of saponification | 4% aqueous solution viscosity 3) | type | Hansen solubility parameter | | | | | solution viscosity | viscosity ratio | Em viscosity | viscosity ratio |
| | | | | | | | δd | δp | δh | | | | | | |
| | | | (mol%) | (mol%) | (mPa·s) | | ($MPa^{0.5}$) | ($MPa^{0.5}$) | ($MPa^{0.5}$) | | | (mPa·s) | (time) | (mPa·s) | (time) |
| Example 1-1 | PVA 1-1 | 1,700 | 0.4 | 98.5 | > 100,000 | DEMB | 16.0 | 7.0 | 10.6 | 20:80 | A | 2,400 | 1.6 | 18,000 | 150.0 |
| Example 1-2 | PVA 1-2 | 2,400 | 0.4 | 98.5 | > 100,000 | DEMB | 16.0 | 7.0 | 10.6 | 20:80 | A | 6,000 | 1.6 | 80,000 | 444.4 |
| Example 1-3 | PVA 1-3 | 3,000 | 0.4 | 98.5 | > 100,000 | DEMB | 16.0 | 7.0 | 10.6 | 20:80 | A | 17,000 | 2.1 | > 100,000 | > 400 |
| Example 1-4 | PVA 1-4 | 500 | 0.4 | 98.5 | 320 | DEMB | 16.0 | 7.0 | 10.6 | 20:80 | A | 100 | 1.4 | 1,200 | 12.0 |
| Example 1-5 | PVA 1-5 | 100 | 0.4 | 98.5 | 30 | DEMB | 16.0 | 7.0 | 10.6 | 20:80 | A | 40 | 2.0 | 200 | 2.0 |
| Example 1-6 | PVA 1-6 | 1,700 | 0.4 | 88 | > 100,000 | DEMB | 16.0 | 7.0 | 10.6 | 20:80 | A | 2,200 | 1.5 | 16,000 | 133.3 |
| Example 1-7 | PVA 1-7 | 1,700 | 0.4 | 80 | > 100,000 | DEMB | 16.0 | 7.0 | 10.6 | 20:80 | A | 2,000 | 1.3 | 15,000 | 125.0 |
| Example 1-8 | PVA 1-8 | 1,000 | 0.4 | 60 | 4,000 | DEMB | 16.0 | 7.0 | 10.6 | 20:80 | A | 2,300 | 1.5 | 15,000 | 125.0 |
| Example 1-9 | PVA 1-10 | 1,700 | 0.08 | 88 | 700 | DEMB | 16.0 | 7.0 | 10.6 | 20:80 | A | 2,000 | 1.3 | 1,200 | 10.0 |
| Example 1-10 | PVA 1-11 | 1,700 | 1.2 | 88 | 85,000 | DEMB | 16.0 | 7.0 | 10.6 | 20:80 | B | 3,000 | 2.0 | 46,000 | 383.3 |
| Example 1-11 | PVA 1-12 | 1,700 | 2.5 | 88 | 60,000 | DEMB | 16.0 | 7.0 | 10.6 | 20:80 | B | 4,000 | 2.7 | > 100,000 | > 833 |
| Example 1-12 | PVA 1-14 | 1,700 | 0.4 | 98.5 | 60 | DEMB | 16.0 | 7.0 | 10.6 | 20:80 | B | 2,000 | 1.3 | 250 | 2.1 |
| Example 1-13 | PVA 1-15 | 1,700 | 0.4 | 98.5 | 1,000 | DEMB | 16.0 | 7.0 | 10.6 | 20:80 | A | 2,100 | 1.4 | 10,000 | 83.3 |
| Example 1-14 | PVA 1-16 | 1,700 | 0.4 | 98.5 | > 100,000 | DEMB | 16.0 | 7.0 | 10.6 | 20:80 | A | 2,200 | 1.5 | 80,000 | 666.7 |
| Example 1-15 | PVA 1-18 | 1,700 | 0.4 | 88 | > 100,000 | DEMB | 16.0 | 7.0 | 10.6 | 20:80 | A | 2,200 | 1.5 | 16,000 | 133.3 |
| Example 1-16 | PVA 1-1 | 1,700 | 0.4 | 98.5 | > 100,000 | DPM | 15.5 | 5.7 | 11.2 | 20:80 | B | 8,000 | 5.3 | 16,000 | 133.3 |
| Example 1-17 | PVA 1-1 | 1,700 | 0.4 | 98.5 | > 100,000 | DPMB | 15.7 | 6.5 | 10.0 | 20:80 | A | 2,000 | 1.3 | 15,000 | 125.0 |
| Example 1-18 | PVA 1-1 | 1,700 | 0.4 | 98.5 | > 100,000 | ETB | 15.3 | 6.1 | 10.8 | 20:80 | B | 4,000 | 2.7 | 2,000 | 16.7 |
| Example 1-19 | PVA 1-1 | 1,700 | 0.4 | 98.5 | > 100,000 | EMB | 16.0 | 5.1 | 12.3 | 20:80 | A | 1,800 | 1.2 | 3,000 | 25.0 |
| Example 1-20 | PVA 1-1 | 1,700 | 0.4 | 98.5 | > 100,000 | DEMB | 16.0 | 7.0 | 10.6 | 10:90 | A | 4,200 | 2.8 | 17,000 | 141.7 |
| Example 1-21 | PVA 1-1 | 1,700 | 0.4 | 98.5 | > 100,000 | DEMB | 16.0 | 7.0 | 10.6 | 30:70 | C | 3,600 | 2.4 | 12,000 | 100.0 |

(continued)

(continued)

| | PVA | | | | | Organic solvent | | | | Organic solvent: water (mass ratio) | Solubility | Evaluation of Solution | | Em Evaluation | |
|---|---|---|---|---|---|---|---|---|---|---|---|---|---|---|---|
| | type | degree of polymerization | percentage of modification (mol%) | degree of saponification (mol%) | 4% aqueous solution viscosity 3) (mPa·s) | type | Hansen solubility parameter δd ($MPa^{0.5}$) | δp ($MPa^{0.5}$) | δh ($MPa^{0.5}$) | | | solution viscosity (mPa·s) | viscosity ratio (time) | Em viscosity (mPa·s) | viscosity ratio (time) |
| Comparative Example 1-1 | PVA 1-9 | 500 | 0.4 | 10 | - | DEMB | 16.0 | 7.0 | 10.6 | 20:80 | D | - | - | - | - |
| Comparative Example 1-2 | PVA 1-13 | 1,700 | 5.5 | 88 | - | DEMB | 16.0 | 7.0 | 10.6 | 20:80 | D | - | - | - | - |
| Comparative Example 1-3 | PVA 1-17 | 1,700 | 0.4 | 98.5 | - | DEMB | 16.0 | 7.0 | 10.6 | 20:80 | B | 3,000 | 2.0 | 120 | 1.0 |
| Comparative Example 1-4 | PVA 1-19 | 3,000 | - | 98.5 | 100 | DEMB | 16.0 | 7.0 | 10.6 | 20:80 | A | 8,000 | 1.0 | 250 | 1.0 |
| Comparative Example 1-5 | PVA 1-1 | 1,700 | 0.4 | 98.5 | > 100,000 | isopropyl alcohol | 15.8 | 6.1 | 16.4 | 20:80 | C | 16,000 | 10.7 | 12,000 | 100.0 |
| Comparative Example 1-6 | PVA 1-1 | 1,700 | 0.4 | 98.5 | > 100,000 | propylene carbonate | 20.0 | 18.0 | 4.1 | 20:80 | B | 16,000 | 10.7 | 13,000 | 108.3 |
| Comparative Example 1-7 | PVA 1-1 | 1,700 | 0.4 | 98.5 | > 100,000 | ethylene glycol monoethyl ether | 16.2 | 9.2 | 14.3 | 20:80 | B | 15,000 | 10.0 | 14,000 | 116.7 |
| Comparative Example 1-8 | PVA 1-1 | 1,700 | 0.4 | 98.5 | > 100,000 | chlorodifluoromethane | 12.3 | 6.3 | 5.7 | 20:80 | D | - | - | - | - |
| Reference Example 1-1 | PVA 1-20 | 1,700 | - | 98.5 | - | DEMB | 16.0 | 7.0 | 10.6 | 20:80 | - | 1,500 | - | 120 | - |
| Reference Example 1-2 | PVA 1-21 | 2,400 | - | 98.4 | - | DEMB | 16.0 | 7.0 | 10.6 | 20:80 | - | 3,800 | - | 180 | - |
| Reference Example 1-3 | PVA 1-19 | 3,000 | - | 98.5 | - | DEMB | 16.0 | 7.0 | 10.6 | 20:80 | - | 8,000 | - | 250 | - |
| Reference Example 1-4 | PVA 1-22 | 500 | - | 98.5 | - | DEMB | 16.0 | 7.0 | 10.6 | 20:80 | - | 70 | - | 100 | - |
| Reference Example 1-5 | PVA 1-23 | 100 | - | 98.4 | - | DEMB | 16.0 | 7.0 | 10.6 | 20:80 | - | 20 | - | 100 | - |
| Reference Example 1-6 | PVA 1-24 | 1,000 | - | 98.5 | - | DEMB | 16.0 | 7.0 | 10.6 | 20:80 | - | 600 | - | 110 | - |

3) Detection limit of the viscosity being 100,000 mPa·s

In terms of the state of solution, superior practical applicability is suggested in the case of evaluations "A" to "C". When the viscosity ratio in Evaluation of Solution is less than 10 times, satisfactory practical applicability is suggested. In connection with the viscosity ratio in Em Evaluation, superior practical applicability as thickeners and the like is suggested when the ratio is no less than 10 times.

As shown in Table 2, according to the solutions of Examples 1-1 to 1-21, irrespective of being a solution of a modified PVA, an elevation of the viscosity was prevented to be less than 10 times as compared with a solution of an unmodified PVA, leading to superior handleability. Furthermore, solutions of Examples 1-1 to 1-4, 1-6 to 1-11, 1-13, 1-14, 1-16, and 1-18 to 1-21 in which the degree of polymerization and the structure of the monomer unit of PVA were specified have a very superior thickening property as compared with unmodified PVA having an equivalent degree of polymerization.

On the other hand, in the case in which PVA fails to satisfy the specified requirements, i.e., percentage of modification, degree of saponification and carbon number of the alkyl group (Comparative Examples 1-1 to 1-4), and/or Hansen solubility parameter of the organic solvent does not fall within the specified range (Comparative Examples 1-5 to 1-8), it was indicated that a solution having a high concentration can not be obtained, or the viscosity is excessively elevated, leading to deterioration of handling characteristics.

Method for Producing PVA

Production Example 2-1: Production of PVA 2-1

Into a 3 L reaction vessel equipped with a stirrer, a reflux condenser, a nitrogen inlet tube, a monomer dripping port and an addition port of the initiator were charged 750 g of vinyl acetate, 250 g of methanol, 3.3 g of an unsaturated monomer having a POA (polyoxyalkylene) group (i.e., monomer A: a compound represented by the above general formula (IV), wherein $R^3$, $R^4$ and $R^5$ represent a hydrogen atom; $R^6$ represents a methyl group; X represents $-CO-NH-CH_2-*$ (wherein, "*" designates the side of the POA group); m is 2; and n is 13. In the monomer A, the arrangement of the unit 1 and the unit 2 provides a block configuration, with the block of the unit 1 being situated at the side of X with respect to the block of the unit 2.). Replacement with nitrogen gas in the system was carried out for 30 min by bubbling nitrogen. Also, a monomer solution was prepared as a delay solution by dissolving the unsaturated monomer having a POA group (monomer A) in methanol to give a concentration of 20%, and subjected to replacement with nitrogen gas by bubbling of nitrogen gas. An elevation of the temperature of the reaction vessel was started, and 0.25 g of 2,2'-azobisisobutyronitrile (AIBN) was added to initiate the polymerization when an internal temperature of 60°C was attained. Polymerization was allowed at 60°C for 3 hours while adding the delay solution dropwise such that the monomer composition (proportion of vinyl acetate and the monomer A) was kept constant in the polymerization solution, followed by cooling to stop the polymerization. The total amount of the monomer A added until the polymerization was stopped was 17.6 g. In addition, the solid content concentration was 24.4% when the polymerization was stopped. Subsequently, unreacted vinyl acetate was removed while adding methanol at 30°C under a reduced pressure at intervals to obtain a methanol solution of a POA modified vinyl ester polymer (POA modified PVAc) (concentration: 35%). Furthermore, 55.6 g of an alkali solution (10% sodium hydroxide solution in methanol) was added to 453.4 g of a methanol solution of the POA modified PVAc (containing 100.0 g of the POA modified PVAc in the solution) prepared by adding methanol thereto to allow for saponification (the concentration of the POA modified PVAc in the saponification solution: 20%; and the molar ratio of sodium hydroxide to the vinyl acetate monomer unit in the POA modified PVAc: 0.1). Since gelatinous matter was produced about 1 min after the alkali solution was added, the gelatinous matter was ground with a grinder, and left to stand at 40°C for 1 hour to allow saponification to proceed. Thereafter, 500 g of methyl acetate was added to neutralize remaining alkali. After confirming the completion of neutralization using a phenolphthalein indicator, the mixture was filtered to obtain a white solid. To the white solid was added 2,000 g of methanol, and left to stand at room temperature for 3 hours to permit washing. After this washing operation was repeated three times, white solid obtained by deliquoring through centrifugation was dried by leaving to stand in a dryer at 65°C for 2 days, whereby a modified (POA-modified) PVA (PVA 2-1) was obtained. PVA 2-1 had a degree of polymerization of 1,760, a degree of saponification of 98.7 mol%, and a percentage of modification (percentage of modification with a POA group) of 0.4 mol%.

Production Examples 2-2 to 2-27: Production of PVAs 2-2 to 2-27

Various types of POA-modified PVAs (PVAs 2-2 to 2-27) were produced by a method similar to that of Production Example 2-1 except that: polymerization conditions such as the amount of vinyl acetate and methanol charged, and the type (Table 4), amount of addition and the like of the unsaturated monomer having a POA group used in the polymerization; and saponification conditions such as the concentration of the POA modified PVAc, the molar ratio of sodium hydroxide with respect to the vinyl acetate monomer unit in saponification were changed as shown in Tables 3 and 4.

Production Example 2-28: Production of PVA 2-28

Into a 3 L reaction vessel equipped with a stirrer, a reflux condenser, a nitrogen inlet tube and an addition port of the initiator were charged 700 g of vinyl acetate and 300 g of methanol. Replacement with nitrogen gas in the system was carried out for 30 min by bubbling nitrogen. An elevation of the temperature of the reaction vessel was started, and 0.25 g of 2,2'-azobisisobutyronitrile (AIBN) was added to initiate the polymerization when an internal temperature of 60°C was attained. After polymerization was allowed at 60°C for 3 hours, the mixture was cooled to stop the polymerization. The solid content concentration was 17.0% when the polymerization was stopped. Subsequently, unreacted vinyl acetate was removed while adding methanol at 30°C under a reduced pressure at intervals to obtain a methanol solution of unmodified polyvinyl acetate (unmodified PVAc) (concentration: 30%). Furthermore, 55.8 g of an alkali solution (10% sodium hydroxide solution in methanol) was added to 544.1 g of a methanol solution of unmodified PVAc (containing 120.0 g of unmodified PVAc in the solution) prepared by adding methanol thereto to allow for saponification (the concentration of the unmodified PVAc in the saponification solution: 20%; and the molar ratio of sodium hydroxide to the vinyl acetate monomer unit in the unmodified PVAc: 0.1). Since gelatinous matter was produced about 1 min after the alkali solution was added, the gelatinous matter was ground with a grinder, and left to stand at 40°C for 1 hour to allow saponification to proceed. Thereafter, 500 g of methyl acetate was added to neutralize remaining alkali. After confirming the completion of neutralization using a phenolphthalein indicator, the mixture was filtered to obtain a white solid. To the white solid was added 2,000 g of methanol, and left to stand at room temperature for 3 hours to permit washing. After this washing operation was repeated three times, white solid obtained by deliquoring through centrifugation was dried by leaving to stand in a dryer at 65°C for 2 days, whereby an unmodified PVA (PVA 2-28) was obtained. The unmodified PVA 2-28 had a degree of polymerization of 1,700, and a degree of saponification of 98.5 mol%.

Production Examples 2-29 to 2-32: Production of PVAs 2-29 to 2-32

Various types of unmodified PVAs (PVAs 2-29 to 2-32) were produced by a method similar to that of Production Example 2-28 except that: the amount of vinyl acetate and methanol charged; and saponification conditions such as the concentration of the unmodified PVAc, the molar ratio of sodium hydroxide with respect to the vinyl acetate monomer unit in saponification were changed as shown in Table 3.

Production Example 2-33: Production of PVA 2-33

Into a 6 L reaction vessel equipped with a stirrer, a reflux condenser, a nitrogen inlet tube, a monomer dripping port and an addition port of the initiator were charged 2,400 g of vinyl acetate, 600 g of methanol and 16.6 g of 1-hexadecene. Replacement with nitrogen gas in the system was carried out for 30 min by bubbling nitrogen. An elevation of the temperature of the reaction vessel was started, and 2.8 g of 2,2'-azobisisobutyronitrile (AIBN) was added to initiate the polymerization when an internal temperature of 60°C was attained. After polymerization was allowed at 60°C for 2 hours, the mixture was cooled to stop the polymerization. The solid content concentration was 32.5% when the polymerization was stopped. Subsequently, unreacted vinyl acetate was removed while adding methanol at 30°C under a reduced pressure at intervals to obtain a methanol solution of an alkyl modified vinyl ester polymer (alkyl modified PVAc) (concentration: 35%). Furthermore, 55.6 g of an alkali solution (10% sodium hydroxide solution in methanol) was added to 453.4 g of a methanol solution of the alkyl modified PVAc (containing 100.0 g of the alkyl modified PVAc in the solution) prepared by adding methanol thereto to allow for saponification (the concentration of the alkyl modified PVAc in the saponification solution: 20%; and the molar ratio of sodium hydroxide to the vinyl acetate monomer unit in the modified PVAc: 0.1). Since gelatinous matter was produced about 1 min after the alkali solution was added, the gelatinous matter was ground with a grinder, and left to stand at 40°C for 1 hour to allow saponification to proceed. Thereafter, 500 g of methyl acetate was added to neutralize remaining alkali. After confirming the completion of neutralization using a phenolphthalein indicator, the mixture was filtered to obtain a white solid. To the white solid was added 2,000 g of methanol, and left to stand at room temperature for 3 hours to permit washing. After this washing operation was repeated three times, white solid obtained by deliquoring through centrifugation was dried by leaving to stand in a dryer at 65°C for 2 days, whereby an alkyl modified PVA (PVA 2-33) was obtained. PVA 2-33 had a degree of polymerization of 1,720, a degree of saponification of 98.6 mol%, and a percentage of (alkyl) modification of 0.3 mol%.

Conditions for production of PVAs 2-1 to 2-33 are shown in Table 3 and Table 4, respectively.

[Table 3]

| | PVA | Charging 1) | | | | Percentage of polymerization | Saponification condition | |
|---|---|---|---|---|---|---|---|---|
| | | vinyl acetate | methanol (before starting polymerization) | unsaturated monomer having a POA group | | | PVAc concentration | NaOH molar ratio 2) |
| | | (g) | (g) | type | g) | (%) | (%) | |
| Production Example 2-1 | PVA 2-1 | 750 | 250 | A | 17.6 | 35 | 20 | 0.1 |
| Production Example 2-2 | PVA 2-2 | 400 | 600 | A | 13 | 50 | 20 | 0.1 |
| Production Example 2-3 | PVA 2-3 | 550 | 450 | A | 11.7 | 30 | 20 | 0.1 |
| Production Example 2-4 | PVA 2-4 | 900 | 100 | A | 21.5 | 35 | 20 | 0.1 |
| Production Example 2-5 | PVA 2-5 | 950 | 50 | A | 14.8 | 20 | 20 | 0.1 |
| Production Example 2-6 | PVA 2-6 | 100 | 900 | A | 4.5 | 80 | 20 | 0.1 |
| Production Example 2-7 | PVA 2-7 | 550 | 450 | A | 11.8 | 30 | 20 | 0.0075 |
| Production Example 2-8 | PVA 2-8 | 550 | 450 | A | 11.8 | 30 | 20 | 0.002 |
| Production Example 2-9 | PVA 2-9 | 550 | 450 | A | 11.8 | 30 | 20 | 0.001 |
| Production Example 2-10 | PVA 2-10 | 750 | 250 | A | 9.9 | 40 | 20 | 0.1 |
| Production Example 2-11 | PVA 2-11 | 750 | 250 | A | 4.9 | 40 | 20 | 0.1 |
| Production Example 2-12 | PVA 2-12 | 750 | 250 | A | 3.9 | 40 | 20 | 0.1 |

(continued)

| | PVA | Charging 1) | | | | Percentage of polymerization | Saponification condition | |
|---|---|---|---|---|---|---|---|---|
| | | vinyl acetate | methanol (before starting polymerization) | unsaturated monomer having a POA group | | | PVAc concentration | NaOH molar ratio 2) |
| | | (g) | (g) | type | g) | (%) | (%) | |
| Production Example 2-13 | PVA 2-13 | 750 | 250 | C | 97.4 | 40 | 20 | 0.1 |
| Production Example 2-14 | PVA 2-14 | 750 | 250 | C | 235 | 40 | 20 | 0.1 |
| Production Example 2-15 | PVA 2-15 | 750 | 250 | B | 7.4 | 40 | 20 | 0.1 |
| Production Example 2-16 | PVA 2-16 | 750 | 250 | C | 6.1 | 40 | 20 | 0.1 |
| Production Example 2-17 | PVA 2-17 | 750 | 250 | D | 4.9 | 40 | 20 | 0.1 |
| Production Example 2-18 | PVA 2-18 | 750 | 250 | E | 3.7 | 40 | 20 | 0.1 |
| Production Example 2-19 | PVA 2-19 | 750 | 250 | F | 11.2 | 40 | 20 | 0.1 |
| Production Example 2-20 | PVA 2-20 | 750 | 250 | G | 13.5 | 40 | 20 | 0.1 |
| Production Example 2-21 | PVA 2-21 | 750 | 250 | H | 14.8 | 40 | 20 | 0.1 |
| Production Example 2-22 | PVA 2-22 | 750 | 250 | I | 32 | 40 | 20 | 0.1 |
| Production Example 2-23 | PVA 2-23 | 750 | 250 | J | 78 | 40 | 20 | 0.1 |
| Production Example 2-24 | PVA 2-24 | 750 | 250 | K | 14.9 | 40 | 20 | 0.1 |
| Production Example 2-25 | PVA 2-25 | 750 | 250 | L | 7.4 | 40 | 20 | 0.1 |

(continued)

| | PVA | Charging 1) | | | | Percentage of polymerization | Saponification condition | |
|---|---|---|---|---|---|---|---|---|
| | | vinyl acetate | methanol (before starting polymerization) | unsaturated monomer having a POA group | | | PVAc concentration | NaOH molar ratio 2) |
| | | (g) | (g) | type | g) | (%) | (%) | |
| Production Example 2-26 | PVA 2-26 | 750 | 250 | M | 9.9 | 40 | 20 | 0.1 |
| Production Example 2-27 | PVA 2-27 | 750 | 250 | N | 11.2 | 40 | 20 | 0.1 |
| Production Example 2-28 | PVA 2-28 | 700 | 300 | - | - | 25 | 20 | 0.1 |
| Production Example 2-29 | PVA 2-29 | 550 | 450 | - | - | 40 | 20 | 0.1 |
| Production Example 2-30 | PVA 2-30 | 350 | 650 | - | - | 40 | 20 | 0.1 |
| Production Example 2-31 | PVA 2-31 | 800 | 200 | - | - | 20 | 15 | 0.1 |
| Production Example 2-32 | PVA 2-32 | 950 | 50 | - | - | 5 | 10 | 0.1 |
| Production Example 2-33 | PVA 2-33 | 2400 | 600 | (1-hexadecene) | 16.6 | 32.5 | 20 | 0.1 |

1) In all Production Examples, 0.25 g of 2,2'-azobisisobutyronitrile (AIBN) was used as the polymerization initiator.
2) Molar ratio of sodium hydroxide (NaOH) to vinyl acetate monomer unit in PVAc

[Table 4]

| Monomer | $R^3$ | $R^4$ | $R^5$ | $R^6$ | X | m | n |
|---|---|---|---|---|---|---|---|
| A | -H | -H | -H | $-CH_3$ | $-CO-NH-CH_2-$* | 2 | 13 |
| B | -H | -H | -H | $-CH_3$ | $-CO-NH-CH_2-$* | 2 | 9 |
| C | -H | -H | -H | $-CH_3$ | $-CO-NH-CH_2-$* | 2 | 6 |
| D | -H | -H | -H | $-CH_3$ | $-CO-NH-CH_2-$* | 2 | 4 |
| E | -H | -H | -H | $-CH_3$ | $-CO-NH-CH_2-$* | 2 | 2 |
| F | -H | -H | -H | $-CH_3$ | $-CO-NH-CH_2-$* | 2 | 16 |
| G | -H | -H | -H | $-CH_3$ | $-CO-NH-CH_2-$* | 2 | 19 |
| H | -H | -H | -H | $-CH_3$ | $-CO-NH-CH_2-$* | 2 | 21 |
| I | -H | -H | -H | -H | -O- | 2 | 10 |
| J | -H | -H | -H | $-CH_2-COONa$ | $-CO-NH-CH_2-$* | 2 | 12 |
| K | -H | -H | -COONa | -H | $-CO-NH-CH_2-$* | 2 | 13 |
| L | -H | -H | -H | $-CH_3$ | $-CO-NH-CH_2-$* | 20 | 0 |
| M | $-CH_3$ | -H | -H | $-CH_3$ | $-CO-NH-CH_2-$* | 20 | 0 |
| N | - | -H | -H | $-CH_3$ | $-CO-NH-CH_2-$* | 0 | 17 |
| * Designates the side of the POA group | | | | | | | |

Example 2-1

To a mixture of 18 g of ethylene glycol mono-t-butyl ether (ETB) as an organic solvent and 72 g of distilled water (organic solvent: = 20:80) was added 10 g of PVA 2-1 at room temperature, and the mixture wad stirred using THREE-ONE MOTOR for 30 min. Next, the temperature of this solution was elevated with stirring to 90°C, and the stirring was continued as is for 1 hr. Thereafter, the mixture was cooled to room temperature to obtain a PVA 2-1 solution having a concentration of 10%.

Solubility of PVA

The state of the PVA 2-1 solution was visually observed, and when determined in accordance with the following criteria, the evaluation was made as "A".

A: transparent solution
B: slightly turbid
C: turbid solution
D: including undissolved residues

Evaluation of Solution: Viscosity of PVA Solution

The viscosity of the PVA 2-1 solution measured using a BL type viscometer at a rotation frequency of a rotor of 6 rpm, and at a temperature of 20°C was 2,300 mPa·s.

Em Evaluation: Viscosity of Ethylene-Vinyl Acetate Copolymer Emulsion (Test for Increasing Viscosity)

To 100 parts of an ethylene-vinyl acetate copolymer emulsion (OM-4200NT, manufactured by Kuraray Co., Ltd., having a concentration of 45% and a viscosity of 100 mPa·s) were added 13.5 parts of the PVA 2-1 solution (solid content of PVA being 3.0 parts with respect to 100 parts of the solid content of the emulsion). The viscosity at 20°C of the emulsion solution was 24,000 mPa·s when measured using a BL type viscometer at a rotation frequency of a rotor of 6 rpm.

Comparison with Unmodified PVA Solution

To a mixture of 18 g of ethylene glycol mono-t-butyl ether (ETB) as an organic solvent and 72 g of distilled water (organic solvent: water = 20:80) was added 10 g of PVA 2-28 (unmodified PVA having a degree of polymerization similar to that of PVA 2-1) at room temperature, and the mixture was stirred using THREE-ONE MOTOR for 30 min. Next, the temperature of this solution was elevated with stirring to 90°C, and the stirring was continued as is for 1 hr. Thereafter, the mixture was cooled to room temperature to obtain a PVA 2-28 solution having a concentration of 10%. When tests were performed using this solution in similar manners to Example 2-1, the solution viscosity was 1,500 mPa·s, and the emulsion viscosity was 120 mPa.s. The solution viscosity of PVA 2-1 was 1.5 times the solution viscosity of the PVA 2-28, whereas the viscosity after addition to the emulsion was 200 times.

Examples 2-2 to 2-30 and Comparative Examples 2-1 to 2-9

Tests similar to those of Example 2-1 were performed except that PVA and the organic solvent used, and a mass ratio of the organic solvent to water were as shown in Table 5 or 6. In this test, Evaluation of Solution and Em Evaluation were not conducted when the evaluation in the state of the PVA solution was made as "D". Further, Em Evaluation was not conducted when the viscosity was less than 100 mPa·s as a result of Evaluation of Solution, or in part, when the viscosity ratio to the unmodified PVA solution was no less than 10 times.

It is to be noted that each Hansen solubility parameter of the organic solvent shown in Tables 5 and 6 was abstracted from Hansen Solubility Parameters: A User's Handbook.

The results of the foregoing are shown in Tables 5 and 6. It is to be noted that the viscosity ratio for Evaluation of Solution and Em Evaluation in Tables 5 and 6 is a ratio with respect to that of unmodified PVA having a similar degree of polymerization. In addition, Table 6 shows as Reference Examples 2-1 to 2-5, results of the solution viscosity and Em viscosity of unmodified PVAs (PVAs 2-28 to 2-32) determined in similar manners to Evaluation of Solution and Em Evaluation described in Example 2-1.

[Table 5]

| | PVA | | | | | Organic solvent | | | | Organic solvent: water (mass ratio) | Solubility | Evaluation of Solution | | Em Evaluation | |
|---|---|---|---|---|---|---|---|---|---|---|---|---|---|---|---|
| | type | degree of polymerization | percentage of modification (% by mole) | degree of saponification (% by mole) | viscosity of 4% aqueous solution 3) (mPa·s) | type | Hansen solubility parameter δd ($MPa^{0.5}$) | δp ($MPa^{0.5}$) | δh ($MPa^{0.5}$) | | | solution viscosity (mPa·s) | viscosity ratio (time) | Em viscosity (mPa·s) | viscosity ratio (time) |
| Example 2-1 | PVA 2-1 | 1,760 | 0.4 | 98.7 | 12,000 | ETB | 15.3 | 6.1 | 10.8 | 20:80 | A | 2,300 | 1.5 | 24,000 | 200.0 |
| Example 2-2 | PVA 2-2 | 520 | 0.4 | 98.7 | 120 | ETB | 15.3 | 6.1 | 10.8 | 20:80 | A | 110 | 0.1 | 5,600 | 46.7 |
| Example 2-3 | PVA 2-3 | 1,050 | 0.4 | 98.8 | 420 | ETB | 15.3 | 6.1 | 10.8 | 20:80 | A | 620 | 0.4 | 7,200 | 60.0 |
| Example 2-4 | PVA 2-4 | 2,450 | 0.4 | 98.9 | 60,000 | ETB | 15.3 | 6.1 | 10.8 | 20:80 | A | 6,200 | 4.1 | 60,000 | 500.0 |
| Example 2-5 | PVA 2-5 | 3,500 | 0.4 | 98.9 | > 100000 | ETB | 15.3 | 6.1 | 10.8 | 20:80 | A | 20,000 | 13.3 | 85,000 | 708.3 |
| Example 2-6 | PVA 2-7 | 1,030 | 0.4 | 89.8 | 650 | ETB | 15.3 | 6.1 | 10.8 | 20:80 | A | 610 | 0.4 | 8,500 | 70.8 |
| Example 2-7 | PVA 2-8 | 1,040 | 0.4 | 32.1 | 860 | ETB | 15.3 | 6.1 | 10.8 | 20:80 | B | 580 | 0.4 | 9,500 | 79.2 |
| Example 2-8 | PVA 2-10 | 1,750 | 0.2 | 98.9 | 800 | ETB | 15.3 | 6.1 | 10.8 | 20:80 | A | 2,200 | 1.5 | 8,200 | 68.3 |
| Example 2-9 | PVA 2-11 | 1,700 | 0.1 | 98.6 | 120 | ETB | 15.3 | 6.1 | 10.8 | 20:80 | A | 2,300 | 1.5 | 4,500 | 37.5 |
| Example 2-10 | PVA 2-13 | 1,730 | 5 | 98.2 | 42,000 | ETB | 15.3 | 6.1 | 10.8 | 20:80 | B | 3,200 | 2.1 | 52,000 | 433.3 |
| Example 2-11 | PVA 2-15 | 1,750 | 0.2 | 98.9 | 580 | ETB | 15.3 | 6.1 | 10.8 | 20:80 | A | 2,200 | 1.5 | 7,200 | 60.0 |
| Example 2-12 | PVA 2-16 | 1,730 | 0.2 | 98.7 | 360 | ETB | 15.3 | 6.1 | 10.8 | 20:80 | A | 2,000 | 1.3 | 6,200 | 51.7 |
| Example 2-13 | PVA 2-17 | 1,700 | 0.2 | 98.4 | 120 | ETB | 15.3 | 6.1 | 10.8 | 20:80 | A | 2,000 | 1.3 | 5,000 | 41.7 |
| Example 2-14 | PVA 2-19 | 1,680 | 0.2 | 98.5 | 1,400 | ETB | 15.3 | 6.1 | 10.8 | 20:80 | A | 2,100 | 1.4 | 8,900 | 74.2 |
| Example 2-15 | PVA 2-20 | 1,680 | 0.2 | 98.6 | 3,500 | ETB | 15.3 | 6.1 | 10.8 | 20:80 | B | 2,200 | 1.5 | 13,000 | 108.3 |

(continued)

(continued)

| | PVA | | | | | Organic solvent | | | | Organic solvent: water (mass ratio) | Solubility | Evaluation of Solution | | Em Evaluation | |
|---|---|---|---|---|---|---|---|---|---|---|---|---|---|---|---|
| | type | degree of polymerization | percentage of modification (% by mole) | degree of saponification (% by mole) | viscosity of 4% aqueous solution 3) (mPa·s) | type | Hansen solubility parameter δd ($MPa^{0.5}$) | δp ($MPa^{0.5}$) | δh ($MPa^{0.5}$) | | | solution viscosity (mPa·s) | viscosity ratio (time) | Em viscosity (mPa·s) | viscosity ratio (time) |
| Example 2-16 | PVA 2-22 | 1,680 | 0.2 | 98.3 | 710 | ETB | 15.3 | 6.1 | 10.8 | 20:80 | A | 2,100 | 1.4 | 7,500 | 62.5 |
| Example 2-17 | PVA 2-23 | 1,720 | 0.2 | 98.4 | 800 | ETB | 15.3 | 6.1 | 10.8 | 20:80 | A | 2,200 | 1.5 | 9,000 | 75.0 |
| Example 2-18 | PVA 2-24 | 1,680 | 0.2 | 98.7 | 920 | ETB | 15.3 | 6.1 | 10.8 | 20:80 | A | 2,100 | 1.4 | 8,800 | 73.3 |
| Example 2-19 | PVA 2-1 | 1,760 | 0.4 | 98.7 | 12,000 | ETB | 15.3 | 6.1 | 10.8 | 25:75 | A | 3,200 | 2.1 | 20,000 | 166.7 |
| Example 2-20 | PVA 2-1 | 1,760 | 0.4 | 98.7 | 12,000 | ETB | 15.3 | 6.1 | 10.8 | 5:95 | A | 4,200 | 2.8 | 22,000 | 183.3 |
| Example 2-21 | PVA 2-1 | 1,760 | 0.4 | 98.7 | 12,000 | DEMB | 16.0 | 7.0 | 10.6 | 20:80 | A | 3,200 | 2.1 | 21,000 | 175.0 |
| Example 2-22 | PVA 2-1 | 1,760 | 0.4 | 98.7 | 12,000 | DPM | 15.5 | 5.7 | 11.2 | 20:80 | A | 3,300 | 2.2 | 21,000 | 175.0 |
| Example 2-23 | PVA 2-1 | 1,760 | 0.4 | 98.7 | 12,000 | DPMB | 15.7 | 6.5 | 10.0 | 20:80 | A | 4,500 | 3.0 | 24,000 | 200.0 |
| Example 2-24 | PVA 2-1 | 1,760 | 0.4 | 98.7 | 12,000 | EMB | 16.0 | 7.6 | 12.3 | 20:80 | A | 2,100 | 1.4 | 26,000 | 216.7 |
| Example 2-25 | PVA 2-6 | 90 | 0.4 | 98.6 | 10 | ETB | 15.3 | 6.1 | 10.8 | 20:80 | A | 30 | - | - | - |
| Example 2-26 | PVA 2-12 | 1,720 | 0.08 | 98.5 | 30 | ETB | 15.3 | 6.1 | 10.8 | 20:80 | A | 1,600 | 1.1 | 110 | 0.9 |
| Example 2-27 | PVA 2-18 | 1,720 | 0.2 | 98.6 | 34 | ETB | 15.3 | 6.1 | 10.8 | 20:80 | A | 1,600 | 1.1 | 100 | 0.8 |
| Example 2-28 | PVA 2-21 | 1,700 | 0.2 | 98.8 | 6,300 | ETB | 15.3 | 6.1 | 10.8 | 20:80 | C | 32,000 | 21.3 | - | - |
| Example 2-29 | PVA 2-27 | 1,700 | 0.4 | 98.5 | 4,500 | ETB | 15.3 | 6.1 | 10.8 | 20:80 | C | 26,000 | 17.3 | - | - |
| Example 2-30 | PVA 2-33 | 1,720 | (0.3) 4) | 98.6 | 6,500 | ETB | 15.3 | 6.1 | 10.8 | 20:80 | C | 25,000 | 16.7 | - | - |

3) Detection limit of the viscosity being 100,000 mPa·s

4) Content of 1-hexadecene unit

[Table 6]

| | PVA | | | | | Organic solvent | | | | Organic solvent: water (mass ratio) | Solubility | Evaluation of Solution | | Em Evaluation | |
|---|---|---|---|---|---|---|---|---|---|---|---|---|---|---|---|
| | type | degree of polymerization | percentage of modification (% by mole) | degree of saponification (% by mole) | viscosity of 4% aqueous solution 5) (mPa·s) | type | Hansen solubility parameter δd $(MPa^{0.5})$ | Hansen solubility parameter δp $(MPa^{0.5})$ | Hansen solubility parameter δh $(MPa^{0.5})$ | | | solution viscosity (mPa·s) | viscosity ratio (time) | Em viscosity (mPa·s) | viscosity ratio (time) |
| Comparative Example 2-1 | PVA 2-9 | 1,040 | 0.4 | 18 | - | ETB | 15.3 | 6.1 | 10.8 | 20:80 | D | - | - | - | - |
| Comparative Example 2-2 | PVA 2-14 | 1,680 | 12 | 98 | - | ETB | 15.3 | 6.1 | 10.8 | 20:80 | D | - | - | - | - |
| Comparative Example 2-3 | PVA 2-25 | 1,700 | 0.4 | 98.5 | 26 | ETB | 15.3 | 6.1 | 10.8 | 20:80 | A | 1,600 | 1.1 | 130 | 1.1 |
| Comparative Example 2-4 | PVA 2-26 | 1,700 | 0.4 | 98.5 | 27 | ETB | 15.3 | 6.1 | 10.8 | 20:80 | A | 1,700 | 1.1 | 120 | 1.0 |
| Comparative Example 2-5 | PVA 2-1 | 1,760 | 0.4 | 98.7 | 12,000 | isopropyl alcohol | 15.8 | 6.1 | 16.4 | 20:80 | C | 18,000 | 12.0 | - | - |
| Comparative Example 2-6 | PVA 2-1 | 1,760 | 0.4 | 98.7 | 12,000 | dimethyl carbonate | 15.5 | 3.9 | 9.7 | 20:80 | D | - | - | - | - |
| Comparative Example 2-7 | PVA 2-1 | 1,760 | 0.4 | 98.7 | 12,000 | propylene carbonate | 20.0 | 18.0 | 4.1 | 20:80 | B | 22,000 | 14.7 | - | - |
| Comparative Example 2-8 | PVA 2-1 | 1,760 | 0.4 | 98.7 | 12,000 | ethylene glycol monoethyl ether | 16.2 | 9.2 | 14.3 | 20:80 | B | 23,000 | 15.3 | - | - |
| Comparative Example 2-9 | PVA 2-1 | 1,760 | 0.4 | 98.7 | 12,000 | chlorodifluoromethane | 12.3 | 6.3 | 5.7 | 20:80 | D | - | - | - | - |
| Reference Example 2-1 | PVA 2-28 | 1,700 | - | 98.5 | - | ETB | 15.3 | 6.1 | 10.8 | 20:80 | - | 1,500 | - | 120 | - |
| Reference Example 2-2 | PVA 2-29 | 1,000 | - | 98.4 | - | ETB | 15.3 | 6.1 | 10.8 | 20:80 | - | 600 | - | 110 | - |
| Reference Example 2-3 | PVA 2-30 | 500 | - | 98.6 | - | ETB | 15.3 | 6.1 | 10.8 | 20:80 | - | 70 | - | 100 | - |
| Reference Example 2-4 | PVA 2-31 | 2,400 | - | 98.5 | - | ETB | 15.3 | 6.1 | 10.8 | 20:80 | - | 3,800 | - | 180 | - |
| Reference Example 2-5 | PVA 2-32 | 3,500 | - | 98.6 | - | ETB | 15.3 | 6.1 | 10.8 | 20:80 | - | 12,000 | - | 420 | - |

5) Detection limit of the viscosity being 100,000 mPa·s

As shown in Tables 5 and 6, irrespective of having a higher concentration as compared with aqueous solutions, the solutions of Examples 2-1 to 2-24 were excellent in handling characteristics with low viscosity, and further have a very superior thickening property as compared with solutions of an unmodified PVA having an equivalent degree of polymerization. However, problems such as impairment of handling characteristics, failure in achieving a thickening property, and the like were found when PVA does not satisfy the requirements in connection with the molecular structure (Comparative Examples 2-1 to 2-4), and/or Hansen solubility parameter of the organic solvent does not fall within the specified range (Comparative Examples 2-5 to 2-9).

Although the reason for the low viscosity exhibited by the modified PVA solution of the present invention has not been clarified, it is presumed that the low viscosity results from inhibition of an interaction between hydrophobic groups of the modified PVA which may be caused by an organic solvent. In addition, although a mechanism by which a great thickening property and the like are achieved when added to an emulsion is not also clarified, it is considered that the organic solvent that inhibits an interaction between hydrophobic groups is incorporated into emulsion particles when the solution is added to an emulsion, whereby an interaction of hydrophobic groups of the modified PVA may be exhibited.

[INDUSTRIAL APPLICABILITY]

The modified PVA solution of the present invention is superior in handleability, and can be suitably used as a thickener and the like.

## Claims

1. A modified vinyl alcohol polymer solution comprising:

   a modified vinyl alcohol polymer; an organic solvent; and water,
   the modified vinyl alcohol polymer: comprising a monomer unit having an alkyl group having a carbon number of 2 or greater and 29 or less; and having a percentage content of the monomer unit being no less than 0.05 mol% and no greater than 5 mol%, and a degree of saponification of the modified vinyl alcohol polymer being no less than 20 mol% and no greater than 99.99 mol%, and
   in terms of Hansen solubility parameters of the organic solvent, $\delta d$ being no less than 13 $MPa^{0.5}$ and no greater than 18 $MPa^{0.5}$, $\delta p$ being no less than 4 $MPa^{0.5}$ and no greater than 9 $MPa^{0.5}$, and $\delta h$ being no less than 9 $MPa^{0.5}$ and no greater than 13 $MPa^{0.5}$.

2. The modified vinyl alcohol polymer solution according to claim 1, wherein the monomer unit has a carbon number of 11 or greater, and a ratio of the carbon number to the oxygen number (carbon number/ oxygen number) in the side chain of the monomer unit is greater than 3/1.

3. The modified vinyl alcohol polymer solution according to claim 1 or 2, wherein the monomer unit is represented by a general formula (I) :

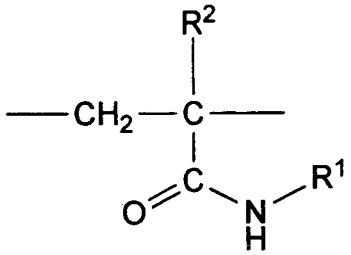

(I)

   wherein, $R^1$ represents a linear or branched alkyl group having a carbon number of 8 or greater and 29 or less; and $R^2$ represents a hydrogen atom or an alkyl group having a carbon number of 1 or greater and 8 or less, and a viscosity average degree of polymerization of the modified vinyl alcohol polymer is no less than 200 and no greater than 5,000.

4. The modified vinyl alcohol polymer solution according to claim 3, wherein the modified vinyl alcohol polymer is obtained by saponifying a copolymer of an unsaturated monomer represented by a general formula (II) and a vinyl

ester monomer:

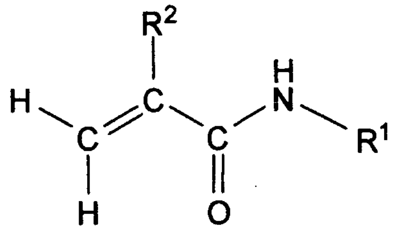

(II)

wherein, $R^1$ and $R^2$ are as defined in the above formula (I).

**5.** The modified vinyl alcohol polymer solution according to claim 1 or 2, wherein the monomer unit comprises a polyoxyalkylene group represented by a general formula (III):

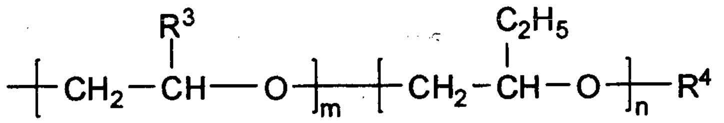

(III)

wherein, $R^3$ represents a hydrogen atom or a methyl group; $R^4$ represents a hydrogen atom or an alkyl group having a carbon number of 1 or greater and 8 or less; $1 \leq m \leq 10$; and $3 \leq n \leq 20$, and a viscosity average degree of polymerization of the modified vinyl alcohol polymer is no less than 200 and no greater than 5,000.

**6.** The modified vinyl alcohol polymer solution according to claim 5, wherein the modified vinyl alcohol polymer is obtained by saponifying a copolymer of an unsaturated monomer represented by a general formula (IV) and a vinyl ester monomer:

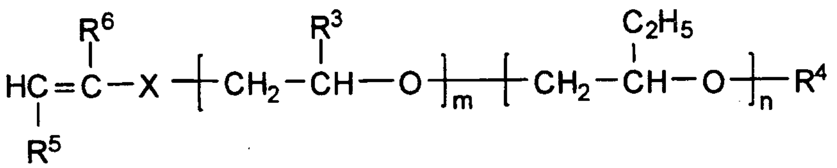

(IV)

wherein, $R^3$, $R^4$, m and n are as defined in the above general formula (III); $R^5$ represents a hydrogen atom or a -COOM$^1$ group; $M^1$ represents a hydrogen atom, an alkali metal atom or an ammonium group; $R^6$ represents a hydrogen atom, a methyl group or a $-CH_2-COOM^2$ group; $M^2$ represents a hydrogen atom, an alkali metal atom or an ammonium group; X represents -O-, $-CH_2-O-$, -CO-, $-(CH_2)_k-$, -CO-O-, $-CO-NR^7-$ or $-CO-NR^7-CH_2-$; $R^7$ represents a hydrogen atom or an alkyl group having a carbon number of 1 or greater and 4 or less; and $1 \leq k \leq 15$.

**7.** The modified vinyl alcohol polymer solution according to any one of claims 1 to 6, wherein in terms of Hansen solubility parameters of the organic solvent, δd is no less than 14 $MPa^{0.5}$ and no greater than 17 $MPa^{0.5}$; and δp is no less than 4 $MPa^{0.5}$ and no greater than 8 $MPa^{0.5}$.

**8.** The modified vinyl alcohol polymer solution according to any one of claims 1 to 7, wherein a mass ratio of the organic solvent to water (organic solvent: water) is no less than 5:95 and no greater than 40:60.

**9.** The modified vinyl alcohol polymer solution according to any one of claims 1 to 8, wherein a concentration of the modified vinyl alcohol polymer is no less than 5% by mass and no greater than 70% by mass.

**10.** A method for producing a modified vinyl alcohol polymer solution comprising the step of:

mixing a modified vinyl alcohol polymer, an organic solvent and water,
the modified vinyl alcohol polymer: comprising a monomer unit having an alkyl group having a carbon number

of 2 or greater and 29 or less; and having a percentage content of the monomer unit being no less than 0.05 mol% and no greater than 5 mol%, and a degree of saponification of the modified vinyl alcohol polymer being no less than 20 mol% and no greater than 99.99 mol%, and
in terms of Hansen solubility parameters of the organic solvent, $\delta d$ being no less than 13 $MPa^{0.5}$ and no greater than 18 $MPa^{0.5}$, $\delta p$ being no less than 4 $MPa^{0.5}$ and no greater than 9 $MPa^{0.5}$, and $\delta h$ being no less than 9 $MPa^{0.5}$ and no greater than 13 $MPa^{0.5}$.

**INTERNATIONAL SEARCH REPORT**

International application No.
PCT/JP2012/056606

A. CLASSIFICATION OF SUBJECT MATTER
*C08L29/04*(2006.01)i, *C08F216/06*(2006.01)i, *C08F220/56*(2006.01)i

According to International Patent Classification (IPC) or to both national classification and IPC

B. FIELDS SEARCHED

Minimum documentation searched (classification system followed by classification symbols)
C08L29/00, C08F16/00, C08F216/00, C08F220/56

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII), JSTPatM

C. DOCUMENTS CONSIDERED TO BE RELEVANT

| Category* | Citation of document, with indication, where appropriate, of the relevant passages | Relevant to claim No. |
|---|---|---|
| Y | JP 2009-114241 A (Sakuranomiya Chemical Co., Ltd.), 28 May 2009 (28.05.2009), claims 1, 8, 9; paragraphs [0024], [0034]; table 1(referential example no.8) (Family: none) | 1-10 |
| Y | JP 2001-261745 A (Kuraray Co., Ltd.), 26 September 2001 (26.09.2001), claim 1; paragraph [0018]; table 3 (Family: none) | 1-10 |
| Y | JP 08-060137 A (Yunichika Chemical Kabushiki Kaisha), 05 March 1996 (05.03.1996), claim 1; paragraphs [0001], [0002]; table 1 (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June, 2012 (01.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/056606

C (Continuation). DOCUMENTS CONSIDERED TO BE RELEVANT

| Category* | Citation of document, with indication, where appropriate, of the relevant passages | Relevant to claim No. |
|---|---|---|
| Y | JP 08-281092 A (The Nippon Synthetic Chemical Industry Co., Ltd.), 29 October 1996 (29.10.1996), claim 1; paragraph [0021]; table 2 (Family: none) | 2-4 |
| Y | JP 07-188347 A (The Nippon Synthetic Chemical Industry Co., Ltd.), 25 July 1995 (25.07.1995), claim 1; paragraph [0026]; table 2 (Family: none) | 2-4 |
| Y | WO 2010/113567 A1 (Kuraray Co., Ltd.), 07 October 2010 (07.10.2010), claims 1, 2; paragraphs [0017], [0018]; tables 1 to 3 (Family: none) | 5,6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008291120 A
- JP H10338714A B
- JP H860137 B
- JP H10338714 B